# EUROPÄISCHE PATENTANMELDUNG

(11) **EP 1 955 601 A1**
(43) Veröffentlichungstag der Anmeldung: **13.08.2008**
(21) Anmeldenummer: 08100928.4
(22) Anmeldetag: 25.01.2008
(51) Int. Cl.: A23L 1/09, A23L 1/10, A23L 1/212, A23L 1/29

(54) **Verwendung von Propenylphenylglycosiden zur Verstärkung süßer sensorischer Eindrücke**

(30) Priorität: 25.01.2007 US 886548 P
(71) Anmelder: Symrise GmbH & Co. KG, 37603 Holzminden (DE)
(72) Erfinder: LEY, Jakob, 37603 Holzminden (DE); LOOFT, Jan, 37603 Holzminden (DE); PAETZ, Susanne, 37671 Höxter (DE)
(74) Vertreter: Eisenführ, Speiser & Partner

(57) **Zusammenfassung**

Die Erfindung betrifft die Verwendung
- eines Propenylphenylglycosids der Formel (I) 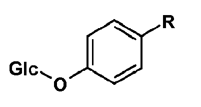 wobei
R
entweder (1 E)-Prop-1-enyl-, (1 Z)-Prop-1 -enyl- oder Prop-2-enyl- darstellt
und
Glc
ein α- oder β-glycosidisch gebundenes Mono- oder Oligosaccharid sein kann

zur Verstärkung des süßen Geschmacks eines süß schmeckenden Stoffes oder des süßen Geruchseindrucks eines Aromastoffes, der einen süßen Geruchseindruck verursacht.

## Beschreibung

Die Erfindung betrifft primär die Verwendung von bestimmten Propenylphenylglycosiden zur Verstärkung des süßen Geschmacks süß schmeckender Stoffe oder des süßen Geruchseindrucks von Aromastoffen, die einen süßen Geruchseindruck verursachen. Die Erfindung betrifft somit primär die Verwendung der besagten Substanzen als Süßverstärker. Ferner betrifft die Erfindung bestimmte Zubereitungen, die einen wirksamen Gehalt an den besagten Propenylphenylglycosiden umfassen sowie Verfahren zum Verstärken des süßen Geschmacks eines süßen schmeckenden Stoffes oder des süßen Geruchseindrucks eines Aromastoffes, der ein süßen Geruchseindruck verursacht.

Nahrungs- oder Genussmittel, die einen hohen Zuckergehalt (vor allem Sucrose (= Saccharose), Lactose, Glucose oder Fructose oder deren Mischungen) aufweisen, werden in der Regel von Verbrauchern auf Grund der Süße stark präferiert. Auf der anderen Seite ist allgemein bekannt, dass ein hoher Gehalt an leicht verstoffwechselbaren Kohlenhydraten den Blutzuckerspiegel stark ansteigen lässt, zur Bildung von Fettdepots führt und letztendlich zu gesundheitlichen Problemen wie Übergewicht, Fettleibigkeit, Insulinresistenz, Altersdiabetes und deren Folgeerkrankungen führen kann. Insbesondere kommt erschwerend hinzu, dass viele der oben genannten Kohlenhydrate zusätzlich die Zahngesundheit beeinträchtigen können, da sie von bestimmten Bakteriensorten in der Mundhöhle zu beispielsweise Milchsäure abgebaut werden und den Zahnschmelz der juvenilen oder adulten Zähne angreifen können (Karies).

Daher ist es schon lange ein Ziel, den Zuckergehalt von Nahrungs- und/oder Genussmitteln auf das unbedingt nötige Maß oder darunter zu reduzieren. Eine entsprechende Maßnahme besteht im Einsatz von Süßstoffen: das sind chemisch einheitliche Substanzen, die selbst keinen oder nur einen sehr geringen kalorischen Brennwert haben und gleichzeitig einen starken süßen Geschmackseindruck verursachen; die Stoffe sind in der Regel nicht-kariogen (eine Übersicht ist z.B. zu finden in Journal of the American Dietetic Association 2004, 104 (2), 255-275). Die sogenannten Bulk-Süßstoffe wie Sorbitol, Mannitol oder andere Zuckeralkohole sind zwar teilweise ausgezeichnete Süßungsmittel und können auch die übrigen nahrungsmitteltechnischen Eigenschaften von Zuckern teilweise ersetzen, führen aber bei zu häufiger Aufnahme bei einem Anteil der Bevölkerung zu osmotisch bedingten Verdauungsproblemen. Die nicht-nutritiven, hochintensiven Süßstoffe sind zwar durch ihre geringe Einsatzkonzentration gut geeignet, Süße in Nahrungsmittel zu bringen, zeigen jedoch oft geschmackliche Probleme durch im Vergleich zu Zucker unähnliche Zeit-Intensitätsprofile (z.B. Sucralose, Stevioside, Cyclamat), einen bitteren und/oder adstringierenden Nachgeschmack (z.B. Acesulfam K, Saccharin), ausgeprägte zusätzliche Aromaeindrücke (z.B. Glycerrhyzinsäureammoniumsalz). Einige der Süßstoffe sind gegenüber Hitze nicht besonders stabil (z.B. Thaumatin, Brazzein, Monellin), sind nicht in allen Anwendungen stabil (z.B. Aspartam) und sind teilweise sehr langanhaltend in ihrer süßen Wirkung (starker süßer Nachgeschmack, z.B. Saccharin, Sucralose).

Eine Verbesserung der geschmacklichen Eigenschaften, insbesondere des Nachgeschmack-Problems von nicht-nutritiven, hochintensiven Süßstoffen kann durch den Einsatz von Tanninsäure, z.B. wie in WO 98/20753 beschrieben, oder Phenolsäuren wie in US 3,924,017 erreicht werden. Allerdings sind solche Stoffe auf Grund ihrer Catechol-Einheiten nicht besonders stabil in Anwendungen.

Eine andere Möglichkeit - ohne den Einsatz von nicht-nutritiven Süßstoffen - besteht darin, den Zuckergehalt von Nahrungs- und/oder Genussmitteln zu senken und sensorisch schwach oder nicht wahrnehmbare Stoffe zuzusetzen, die die Süße mittelbar oder unmittelbar verstärken, wie z.B. in WO 2005/041684 beschrieben. Die in WO 2005/041684 beschriebenen Stoffe sind aber ausdrücklich nicht-natürlichen Ursprungs und somit aus toxikologischer Sicht schwieriger zu bewerten als Stoffe natürlicher Herkunft, insbesondere wenn letztere in Nahrungs- oder Genussmitteln vorkommen oder aus Rohstoffen zur Nahrungs- oder Genussmittelgewinnung stammen. In EP 1 291 342 werden solche Stoffe natürlicher Herkunft (Pyridinium-Betaine) beschrieben; allerdings wird durch sie nicht selektiv der süße Geschmack, sondern auch andere Geschmacksrichtungen wie Umami oder Salzigkeit beeinflusst. Zudem sind die offenbarten Stoffe nur mit hohem Aufwand zu reinigen.

In PCT/EP 2006/06433 wird der Einsatz von Hesperetin und in US 60/784, 444 und den darauf basierenden Dokumenten (Symrise) wird Phloretin als Verstärker des süßen Geschmacks von Zucker-reduzierten, der Ernährung oder dem Genuss dienenden Zubereitungen empfohlen. Bisweilen nachteilig ist allerdings bei Einsatz von Hesperetin und Phloretin die vergleichsweise schwach ausgeprägte Süßverstärkung in hohe Anteile Proteine, insbesondere denaturierte Proteine, oder Polysaccharide enthaltenden Nahrungs- und Genussmitteln wie z.B. Joghurt-Produkten.

Daher ist es wünschenswert, Stoffe zu finden, die in geringen Konzentrationen süße Geschmackseindrücke von süßen Stoffen, bevorzugt den süßen Geschmackseindruck von Zucker-reduzierten Nahrungs- und Genussmitteln, insbesondere von Zucker-reduzierten, hohe Anteile Proteine, insbesondere denaturierte Proteine, oder Polysaccharide enthaltende Nahrungs- und Genussmitteln wirkungsvoll verstärken, ohne das übrige Aromaprofil negativ zu beeinflussen. Ebenso ist es wünschenswert, Stoffe zu finden, die in geringen Konzentrationen süße Geruchseindrücke von Aromastoffen, die einen süßen Geruchseindruck verursachen, wirkungsvoll verstärken.

Es war die primäre Aufgabe der vorliegenden Erfindung, Stoffe zu finden, die (a) selektiv zur Verstärkung des süßen Geschmacks eines süß schmeckenden Stoffes und/oder des süßen Geruchseindrucks eines Aromastoffes, der einen süßen Geruchseindruck verursacht, geeignet sind, vorzugsweise ohne das übrige Aromaprofil negativ zu beeinflussen, (b) auch in hohe Anteile Proteine, insbesondere denaturierte Proteine oder Polysaccharide enthaltenden Zubereitungen breit anwendbar sind und vorzugsweise (c) natürlich vorkommen, vorzugsweise in Nahrungs- und/oder Gewürzpflanzen oder daraus bereiteten Auszügen zu deren Zubereitung vorkommen oder bei der Herstellung von Nahrungs- oder Genussmitteln gebildet werden.

Gemäß einem ersten Aspekt der vorliegenden Erfindung wird die gestellte Aufgabe gelöst durch Verwendung
- eines Propenylphenylglycosids der Formel (I) 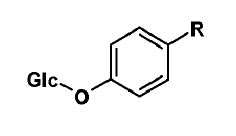
wobei
- R: (1 *E*)-Prop-1-enyl-, (1 Z)-Prop-1-enyl- oder Prop-2-enyl- ist
und
- Glc: ein α- oder β-glycosidisch gebundenes Mono- oder Oligosaccharid ist,
oder
- einer Mischung umfassend oder bestehend aus zwei oder mehr unterschiedlichen Propenylphenylglycosiden der Formel (I) wobei R und Glc jeweils eine der oben angegebenen Bedeutungen haben,
zur Verstärkung des süßen Geschmacks eines süß schmeckenden Stoffes oder des süßen Geruchseindrucks eines Aromastoffes, der einen süßen Geruchseindruck verursacht.

α- oder β-glycosidisch gebundende Mono- oder Oligosaccharide im Sinne der Erfindung sind Monosaccharide bzw., Di-, Tri- oder Tetrasaccharide, das heißt aus 2, 3 oder 4 Monosaccharideinheiten über Sauerstoffbrücken aufgebaute Saccharide, wobei die Monosaccharide bzw. Monosaccharideinheiten jeweils und bei Anwesenheit von 2 oder mehr Monosaccharideinheiten unabhängig voneinander vorzugsweise ausgewählt sind aus den jeweiligen D- bzw. L-Isomeren von Allose, Altrose, Gulose, Mannose, Glucose, Idose, Galactose, Talose, Psicose, Sorbose, Fructose, Tagatose, Rhamnose, Fucose, Xylose, Lyxose, Ribose, Ribulose, Xylulose, Tertrulose, Arabinose, Erythritose, Threose, Glyceraldehyd, 2-Amino-2-deoxy-glucose, 2-Amino-2-deoxy-mannose, 2-Amino-2-deoxy-galactose, 2-Acetylamino-2-deoxy-glucose, 2-Acetylamino-2-deoxy-mannose, 2-Acetylamino-2-deoxy-galactose, Apiose, Glucuronsäure, Galacturonsäure, Glucuronsäuremethylester, Galacturonsäuremethylester, Galactosaminsulfat oder Glucosaminsulfat, wobei die einzelnen Monosaccharide bzw. Monosaccharideinheiten als offenkettige oder als cyclische Pyranose- oder Furanose-Isomere vorliegen können und die Verknüpfung des Monosaccharids bzw. einer Monosaccharideinheit über dessen bzw. deren anomeres Zentrum α- oder β-glycosidisch an das phenolische Sauerstoffatom des Aglycons erfolgt.

Bevorzugte α- oder β-glycosidisch gebundende Oligosaccharide sind Mono- oder Disaccharide, das heißt Monosaccharide bzw. aus 2 Monosaccharideinheiten über Sauerstoffbrücken aufgebaute Oligosaccharide, wobei die Monosaccharide bzw. Monosaccharideinheiten aus jeweils (unabhängig voneinander ausgewählt sind aus den jeweiligen D-Isomeren der Mannose, Glucose, Galactose, Fructose, Rhamnose, Xylose, Lyxose, Ribose, Arabinose, Apiose wobei die einzelnen Monosaccharide bzw. Monosaccharideinheiten als cyclische Pyranose- oder Furanose-Isomere vorliegen und die Verknüpfung des Monosaccharids bzw. eines der Monosaccharideinheiten über dessen bzw. deren anomeres Zentrum α- oder β-glycosidisch an das phenolische Sauerstoffatom des Aglycons erfolgt.

Besonders bevorzugte α- oder β-glycosidisch gebundende Oligosaccharide sind D-Glucopyranose, D-Galactopyranose, D-Mannopyranose, Maltobiose, Cellobiose, Lactose, Primeverose, Neohesperidose, Rutinose oder Acuminose, die α- oder β-glycosidisch an das phenolische Sauerstoffatom des Aglycons gebunden sind.

Besonders bevorzugt ist hierbei eine erfindungsgemäße Verwendung, wobei in Formel (I)
- Glc: ein α- oder β-glycosidisch gebundendes Mono- oder Oligosaccharid ist, aus-gewählt aus der Gruppe bestehend aus D-Glucopyranose, D-Galactopyranose, D-Mannopyranose, Maltobiose, Cellobiose, Lactose, Primeverose, Neohesperidose und Rutinose.

Ganz besonders bevorzugt ist die Verwendung von Propenylphenylglucosiden, die ausgewählt sind aus der Gruppe bestehend aus den α- oder β-Anomeren, besonders bevorzugt den β-Anomeren,
- des 1-*O*-[4-(Propen-2-enyl)phenyl]-D-glucopyranosides (Chavicolglucosid, Verbindung 1),
- des 1-*O*-[4-(Propen-2-enyl)phenyl]-6-O-β-D-apiofuranosyl-D-glucopyranosids (Furcatin, Verbindung 2),
- des 1-*O*-[4-(Propen-2-enyl)phenyl]-6-O-β-D-rutinosids (Verbindung 3) und
- des 1-*O*-[4-(Propen-2-enyl)phenyl]-O-β-D-xylopyranosyl-(1-6)-β-D-glucopyranosids (p-Allylphenylprimeverosid, Miyaginin, Verbindung 4).

Es versteht sich, dass auch der Einsatz einer Mischung umfassend oder bestehend aus 2 oder mehr der vorstehend genannten Verbindungen 1, 2, 3 und/oder 4 besonders bevorzugt ist.

Die bevorzugten Verbindungen 1, 2, 3 und 4 sind in der folgenden Abbildung noch einmal zur Verdeutlichung aufgeführt (an Verbindung 1 ist das Nummerierungsschema angegeben):

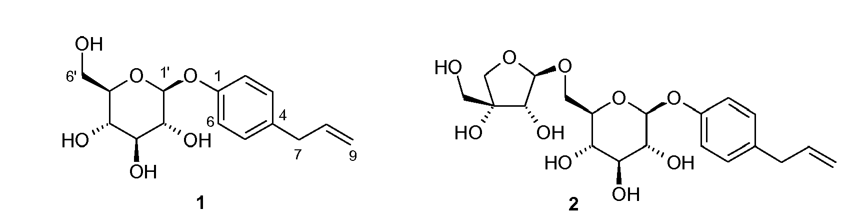

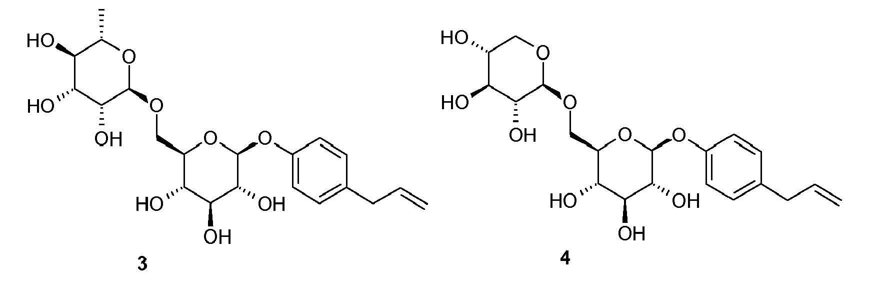

Es sei darauf hingewiesen, dass die erfindungsgemäß einzusetzenden Propenylphenylglycoside der Formel (I) (insbesondere in einer als bevorzugt bezeichneten Ausgestaltung) regelmäßig nicht in einer Menge oder Darreichungsform eingesetzt werden, in der ihre intrinsische Süße oder die intrinsische Süße der gegebenenfalls durch Zersetzung aus ihnen hervorgehenden Mono- oder Oligosaccharide sensorisch wahrnehmbar ist. Hinsichtlich Angaben zu bevorzugten Einsatzkonzentrationen vergleiche unten.

Vorzugsweise werden die vorstehend angegebenen, erfindungsgemäß einzusetzenden Substanzen und Substanzmischungen (insbesondere die vorstehend als bevorzugt angegebenen Verbindungen und Mischungen) zur Verstärkung des süßen Geschmacks eines süß schmeckenden Stoffes oder des süßen Geruchseindrucks eines Aromastoffes, der einen süßen Geruchseindruck verursacht, in einer der Ernährung, der Mundpflege oder dem Genuss dienenden Zubereitung eingesetzt.

Die Erfindung betrifft neben der bislang erläuterten Verwendung bestimmter Substanzen oder Substanzmischungen gemäß einem weiteren Aspekt auch entsprechende Zubereitungen, in denen die besagten Substanzen bzw. Substanzmischungen in der erfindungsgemäßen Weise eingesetzt sind.

In WO 2006/087370 A1 wird die Verwendung synthetisch hergestellter Aromastoffglycoside, insbesondere von Vanillylglucosid in Nahrungs- und Genussmitteln beschrieben. Dabei wird darauf gezielt, dass die zugrunde liegenden Aromastoffe aus den Aromastoffglycosiden nach mehr oder weniger langer Zeit vollständig freigesetzt werden. Die offenbarten Aromastoffglycoside werden nicht als eigenständige Aromastoffe mit Geruch- oder Geschmackseigenschaften oder Geruchs- bzw. Geschmacks-beeinflussenden Eigenschaften eingesetzt. Propenylphenylglycoside (insbesondere die obigen Verbindungen 1 bis 4) werden in der WO 2006/087370 A1 nicht erwähnt.

In einer eigenen Untersuchung konnte zudem festgestellt werden, dass die erfindungsgemäß einzusetzenden Propenylphenylglycoside in Deuteriumoxid alleine oder auch mit zugesetztem Speichel laut NMR-Messungen innerhalb eines Tages nicht abgebaut werden, d.h. die beobachteten Effekte der Verstärkung des süßen Geschmacks nicht auf die Bestandteile Mono- oder Oligosaccharid bzw. Propenylphenole zurückzuführen sein können sondern durch die Propenylphenylglycoside an sich ausgelöst werden.

Eine erfindungsgemäße Zubereitung ist vorzugsweise aus der Gruppe ausgewählt, die aus der Ernährung, der Mundpflege oder dem Genuss dienenden Zubereitungen, Halbfertigwaren, Riech-, Aroma- oder Geschmackstoffkompositionen oder Würzmischungen besteht. Eine erfindungsgemäße Zubereitung umfasst die folgenden Komponenten:(a) ein oder mehrere Propenylphenylglycoside der Formel (I) 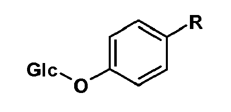 wobei jeweils
- R: (1 *E*)-Prop-1-enyl-, (1 Z)-Prop-1-enyl- oder Prop-2-enyl- ist
und
- Glc: ein α- oder β-glycosidisch gebundenes Mono- oder Oligosaccharid ist
sowie
(b) einen oder mehrere weitere süß schmeckende Stoffe
   und/oder
(c) einen oder mehrere Aromastoffe, die einen süßen Geruchseindruck verursachen,
wobei die Gesamtmenge an Komponente (a) in der Zubereitung ausreicht, den süßen Geschmackseindruck des bzw. der süß schmeckenden Stoffe (b) bzw. den süßen Geruchseindruck des bzw. der Aromastoffe (c), die einen süßen Geruchseindruck verursachen, sensorisch überproportional zu verstärken, (d. h. über eine Wirkung hinaus, die durch Eigensüße verursacht wird).

Hinsichtlich der bevorzugten Bedeutung der Gruppen R und Glc in Formel (I) gilt dabei das hinsichtlich der erfindungsgemäßen Verwendung gesagte entsprechend.

Vorzugsweise ist also in der bzw. einer bzw. sämtlichen Verbindungen der Formel (I)
Glc ein α- oder β-glycosidisch gebundendes Mono- oder Oligosaccharid, ausgewählt aus der Gruppe bestehend aus D-Glucopyranose, D-Galactopyranose, D-Mannopyranose, Maltobiose, Cellobiose, Lactose, Primeverose, Neohesperidose und Rutinose.

Auch in den erfindungsgemäßen Zubereitungen ist es vorteilhaft, wenn diese als oder in Komponente (a) umfassen:
ein Propenylphenylglycosid ausgewählt aus der Gruppe bestehend aus α- und β-Anomeren des
   - 1-*O*-[4-(Propen-2-enyl)phenyl]-D-glucopyranosides (Chavicolglucosid, Verbindung 1),
   - des 1-*O*-[4-(Propen-2-enyl)phenyl]-6-O-β-D-apiofuranosyl-D-glucopyranosids (Furcatin, Verbindung 2),
   - des 1-*O*-[4-(Propen-2-enyl)phenyl]-6-O-β-D-rutinosids (Verbindung 3) oder
   - des 1-*O*-[4-(Propen-2-enyl)phenyl]-O-β-D-xylopyranosyl-(1-6)-β-D-glucopyranosids (p-Allylphenylprimeverosid, Miyaginin, Verbindung 4)
oder eine Mischung von zwei oder mehr Propenylphenylglycosiden der besagten Gruppe.

Es sei an dieser Stelle darauf hingewiesen, dass sämtliche Ausführungen zu bevorzugten Ausgestaltungen einer erfindungsgemäßen Verwendung, einer erfindungsgemäßen Zubereitung oder eines erfindungsgemäßen Verfahrens jeweils entsprechend für die anderen Erfindungsaspekte gelten.

Eine bevorzugte erfindungsgemäße Zubereitung umfasst als Komponente (b) einen oder mehrere Zucker, wobei die Gesamtmenge an Propenylphenylglycosiden der Formel (I) (Komponente (a)) in der Zubereitung ausreicht, um im Vergleich mit einer Zubereitung oder Halbfertigware, die bei ansonsten identischer Zusammensetzung keine Propenylphenylglycoside der Formel (I), aber zumindest die 1,05-fache Menge (vorzugsweise zumindest 1,2-fache, bevorzugt 1,4-fache Menge) an Zucker umfasst, den gleichen oder einen verstärkten Süßeeindruck zu vermitteln. Die Zucker sind dabei vorzugsweise ausgewählt aus der Gruppe bestehend aus: Sucrose, Lactose, Glucose, Maltose, Fructose und deren Mischungen.

Einige der Propenylphenylglycoside der Formel (I), welche erfindungsgemäß zu verwenden sind und in den erfindungsgemäßen Zubereitungen anwesend sind, sind an sich bekannt. So wurden das β-Anomere des 1-*O*-[4-(Prop-2-enyl)phenyl]-D-glucopyranosides (Verbindung 1, CAS-Registry Number 64703-98-6) in *Cleidon brevipetiolatum* beschrieben (C. Li, H. Zhou, X. Yang, J. Zhao und L. Li, Tianran Chanwu Yanjiu Kaifa 2004, 16 (6), 514-515). Furcatin (Verbindung 2) wurde in *Viburnum furcatum* beschrieben (Tsunao Hase und Tetsuo Iwagawa, Bulletin of the Chemical Society of Japan 1982, 55 (11), 3663-3664). 1-*O*-[4-(Prop-2-enyl)phenyl]-β-D-glucopyranosid (Verbindung 1) und 1-*O*-[4-(Prop-2-enyl)phenyl]-β-D-rutinosid (β-Enantiomer der Verbindung 3) sind in dem Rhizom der als Gewürz verwendeten Pflanze *Alpinia galanga* gefunden worden (Tram Ngoc Ly, Ryo Yamauchi, Makoto Shimoyamada und Koji Kato, J. Agric. Food Chem. 2002, 50 (17), 4919-4924). 1-*O-*[4-(Prop-2-enyl)phenyl]-O-β-D-xylopyranosyl-(1-6)-β-D-glucopyranosid (Miyaginin, Verbindung 4) wurde in *Lespedeza thunbergii* gefunden (Makoto Ojika, Hiroki Kuyama, Haruki Niwa und Kiyoyuki Yamada, Bulletin of the Chemical Society of Japan 1984, 57 (10), 2893-2896).

α-Anomere von Verbindungen der Formel (I), insbesondere die im letzten Abschnitt genannten Glycoside, sind nicht bekannt, sie sind somit auch Gegenstand der vorliegenden Erfindung. Die Erfindung betrifft somit auch Propenylphenylglycoside der Formel (I) 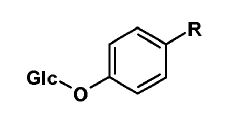 wobei
- R: (1 *E*)-Prop-1-enyl-, (1 Z)-Prop-1-enyl- oder Prop-2-enyl- ist
und
- Glc: ein α-glycosidisch gebundenes Mono- oder Oligosaccharid ist,
oder
- einer Mischung umfassend oder bestehend aus zwei oder mehr unterschiedlichen Propenylphenylglycosiden der Formel (I) wobei R und Glc jeweils eine der oben angegebenen Bedeutungen haben.

Besonders bevorzugte erfindungsgemäße α-Anomere der Formel (I) umfassen als Gruppe Glc ein α-glycosidisch gebundendes Mono- oder Oligosaccharid, ausgewählt aus der Gruppe bestehend aus D-Glucopyranose, D-Galactopyranose, D-Mannopyranose, Maltobiose, Cellobiose, Lactose, Primeverose, Neohesperidose und Rutinose.

Die erfindungsgemäß einzusetzenden Propenylphenylglycoside (bzw. deren Mischungen) können natürlichen Ursprungs sein (z. B. aus Pflanzenteilextrakten wie *Alpinia ssp., Cleidon spp., Lespedeza spp.* oder *Viburnum ssp.* ), oder aus Chavicol und einem Kohlenhydratderivat mit Hilfe enzymatischer oder anderer chemischer Prozesse zur Glycosidierung gewonnen werden (vgl. Methoden, die in K. Toshima und K. Tatsuta, Chem. Rev. 1993, 93, 1503-1531, R.J. Ferrier, R. Blattner, R. Furneaux, J.M. Gardiner, P.C. Tyler, R.H. Wightman und N.R. Williams, Carbohydr. Chem. 1996, 28, 19-63 oder in Hélène Pellissier, Tetrahedron 2005, 61 (12), 2947-2993 beschrieben sind).

Eine bevorzugte erfindungsgemäße Zubereitung (wie vorstehend beschrieben, insbesondere in einer bevorzugten Ausgestaltung) umfasst als oder in Komponente (b) einen oder mehrere weitere süß schmeckende Stoffe, wobei der oder die weiteren süß schmeckenden Stoffe ausgewählt sind aus der Gruppe bestehend aus:
(i) ein oder mehrere Kohlenhydrate (Zucker) ausgewählt aus der Gruppe bestehend aus Sucrose, Trehalose, Lactose, Maltose, Melizitose, Melibiose, Raffinose, Palatinose, Lactulose, D-Fructose, D-Glucose, D-Galactose, L-Rhamnose, D-Sorbose, D-Mannose, D-Tagatose, D-Arabinose, L-Arabinose, D-Ribose, D-Glyceraldehyd, Maltodextrin und pflanzliche Zubereitungen enthaltend einen oder mehrere der genannten Kohlenhydrate, (vorzugsweise in einem Anteil von zumindest 5 Gew. %, bevorzugt zumindest 15 Gew.-%), wobei diese Kohlenhydrate auch als natürliche oder künstlich hergestellte Mischung vorliegen können (z.B. als Honig, Invertzuckersirup, hochangereicherte Fructose-Sirupe aus Maisstärke [High Fructose Corn Sirup])
(ii) ein oder mehrere Zuckeralkohole ausgewählt aus der Gruppe bestehend aus Glycerin, Erythritol, Threitol, Arabitol, Ribitol, Xylitol, Sorbitol, Mannitol, Maltitol, Isomaltit, Dulcitol und Lactitol,
(iii) ein oder mehrere Proteine und/oder Aminosäuren aus der Gruppe bestehend aus Miraculin, Monellin, Thaumatin, Curculin, Brazzein, Glycin, D-Leucin, D-Threonin, D-Asparagin, D-Phenylalanin, D-Tryptophan, L-Prolin oder aus natürlichen Quellen gewonnenen Extrakte oder Fraktionen, enthaltend diese Aminosäuren und/oder Proteine
(iv) ein oder mehrere Süßstoffe aus der Gruppe bestehend aus Magap, Natriumcyclamat, Acesulfam K, Neohesperidindihydrochalkon, Saccharin-Natriumsalz, Aspartam, Superaspartam, Neotam, Alitam, Sucralose, Stevioside, Rebaudioside, Lugduname, Carrelame, Sucrononate, Sucrooctate, Monatin, Mogroside und Phyllodulcin, wobei im Falle der natürlich vorkommenden Süßstoffe auch Extrakte oder angereicherte Fraktionen dieser Extrakte verwendet werden können, z.B. Stevia-Extrakte, Citrus-Extrakte, Buddah-Tee-Extrakte
und deren Mischungen
und/oder
(c) einen oder mehrere Aromastoffe, die einen süßen Geruchseindruck verursachen, wobei der oder die weiteren Aromastoffe, die einen süßen Geruchseindruck verursachen, ausgewählt sind aus der Gruppe bestehend aus:

Vanillin, Ethylvanillin, Ethylvanillinisobutyrat (= 3-Ethoxy-4-isobutyryloxybenz-aldehyd), Furaneol^{®} (2,5-Dimethyl-4-hydroxy-3(2H)-furanon) und Abkömmlinge (z.B. Homofuraneol, 2-Ethyl-4-hydroxy-5-methyl-3(2H)-furanon), Homofuronol (2-Ethyl-5-methyl-4-hydroxy-3(2H)-furanon und 5-Ethyl-2-methyl-4-hydroxy-3(2H)-furanon), Maltol und Abkömmlinge (z.B. Ethylmaltol), Cumarin und Abkömmlinge, gamma-Lactone (z.B. gamma-Undecalacton, gamma-Nonalacton), delta-Lactone (z.B. 4-Methyldeltalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenone, 3-Hydroxy-4,5-dimethyl-2(5H)-furanon, Fruchtester und Fruchtlactone (z.B. Essigsäure-n-butylester, Essigsäureisoamylester, Propionsäureethylester, Buttersäureethylester, Buttersäure-n-butylester, Buttersäureisoamylester, 3-Methyl-buttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat), 4-(p-Hydroxyphenyl)-2-butanon, 1,1-Dimethoxy-2,2,5-trimethyl-4-hexan, 2,6-Dimethyl-5-hepten-1-al und Phenylacetaldehyd.

Bevorzugt ist der Einsatz von süß schmeckenden Stoffen ausgewählt aus der Gruppe bestehend aus
(a) Sucrose, Lactose, D-Glucose, Maltose, D-Tagatose und D-Fructose, wobei diese Kohlenhydrate auch als natürliche oder künstlich hergestellte Mischung vorliegen können (z.B. als Honig, Invertzuckersirup, hochangereicherte Fructose-Sirupe aus Maisstärke [High Fructose Corn Sirup])
(b) Erythritol, Threitol, Arabitol, Ribitol, Xylitol, Sorbitol, Mannitol, Maltitol, Isomaltit, Dulcitol und Lactitol,
(c) Thaumatin, Glycin, D-Phenylalanin, D-Tryptophan,
(d) Süßstoffe aus der Gruppe Natriumcyclamat, Acesulfam K, Neohesperidindihydrochalkon, Saccharin-Natriumsalz, Aspartam, Superaspartam, Neotam, Alitam, Sucralose, Stevioside,
wobei die Menge an Propenylphenylglycosid(en) in der Zubereitung ausreicht, den süßen Geschmackseindruck des bzw. der süß schmeckenden Stoffe sensorisch zu verstärken.

Vorzugsweise liegt die Gesamtmenge an Propenylphenylglycosiden der Formel (I) in einer erfindungsgemäßen Zubereitung im Bereich von 0,1 bis 500 ppm, bevorzugt im Bereich von 1 bis 250 ppm, besonders bevorzugt im Bereich 50 bis 200 ppm bezogen auf das Gesamtgewicht der Zubereitung.

Insbesondere mit den oben genannten Kombinationen kann (wie oben erwähnt) eine synergistische Steigerung des süßen Geschmackseindrucks erzielt werden.

Vorstehend wurden bevorzugte süß schmeckende Stoffe angegeben. Allgemein können süß schmeckende Stoffe (inklusive natürlicher Quellen dieser Stoffe) aber beispielsweise sein: süß schmeckende Kohlenhydrate bzw. Zucker (z.B. Sucrose (synonym zu Saccharose), Trehalose, Lactose, Maltose, Melizitose, Melibiose, Raffinose, Palatinose, Lactulose, D-Fructose, D-Glucose, D-Galactose, L-Rhamnose, D-Sorbose, D-Mannose, D-Tagatose, D-Arabinose, L-Arabinose, D-Ribose, D-Glyceraldehyd, Maltodextrin) oder pflanzliche Zubereitungen enthaltend hauptsächlich diese Kohlenhydrate (z.B. aus Zuckerrübe (Beta vulgaris ssp., Zuckerfraktionen, Zuckersirup, Melasse), aus Zuckerrohr (Saccharum officinarum ssp., z.B. Melasse, Zuckersirupe), aus Zuckerahorn (Acer ssp.), aus Agave (Agavendicksaft), künstliche/enzymatische Hydrolysate von Stärke oder Sucrose (z.B. Invertzuckersirup, hochangereicherte Fructose-Sirupe aus Maisstärke), Fruchtkonzentrate (z.B. aus Birnen, Birnenkraut)), Zuckeralkohole (z.B. Glycerin, Erythritol, Threitol, Arabitol, Ribitol, Xylitol, Sorbitol, Mannitol, Maltitol, Isomaltit, Dulcitol, Lactitol), Proteine (z.B. Miraculin, Monellin, Thaumatin, Curculin, Brazzein), Süßstoffe (Magap, Natriumcyclamat, Acesulfam K, Neohesperidindihydrochalkon, Saccharin-Natriumsalz, Aspartam, Superaspartam, Neotam, Alitam, Sucralose, Stevioside, Rebaudioside, Lugduname, Carrelame, Sucrononate, Sucrooctate, Monatin, Phyllodulcin), bestimmte süßschmeckende Aminosäuren (Glycin, D-Leucin, D-Threonin, D-Asparagin, D-Phenylalanin, D-Tryptophan, L-Prolin), sonstige süß schmeckende niedermolekularen Stoffe (z.B. Hernandulcin, Isocumarine wie Phyllodulcin oder Hydrangenol, Dihydrochalkonglycoside wie Neophesperidindihydrochalkon, Glycyrrhizin, Glycyrrhetinsäureammoniumsalz oder andere Glycyrrhetinsäurederivate), Extrakte aus Süßholz (Glycyrrhizza glabra ssp.), Extrakte aus Lippia dulcis, Extrakte oder Einzelstoffe aus Momordica ssp. (insbesondere Momordica grosvenori [Luo Han Guo] und die daraus gewonnenen Mogroside), aus Hydrangea dulcis oder aus Stevia ssp. (z.B. Stevia rebaudiana).

Die vorstehend genannten bevorzugten Aromastoffe sind Aromastoffe, die einen süßen Geruchseindruck verursachen, d. h. Aromastoffe die zwar nicht süß im engeren Sinne schmecken, aber einen süßen Geschmack im weiteren Sinne (insbesondere inklusive Geruchswahrnehmung) suggerieren.

Die Erfindung beruht auf der überraschenden Erkenntnis, dass die erfindungsgemäß zu verwendenden Propenylphenylglycoside der Formel (I) (bzw. deren Mischungen, wie oben angegeben) bereits in sehr geringen Konzentrationen (unter 0,025 Gew.-%, vergleiche hierzu die weiter unten angegebenen Konzentrationsbereiche) den süßen Geschmackseindruck von süß schmeckenden Stoffen (wie oben angegeben), insbesondere aber von Zuckern wie Sucrose, Lactose, Glucose, D-Tagatose und Fructose sowie Zuckeralkoholen wie z.B. Glycerin, Erythritol, Threitol, Arabitol, Ribitol, Xylitol, Sorbitol, Mannitol, Dulcitol, Lactitol überproportional (d. h. synergistisch) steigern und es somit möglich ist, den Zuckergehalt in entsprechenden Nahrungs- und Genussmitteln zu senken, ohne gleichzeitig den süßen Geschmackseindruck zu vermindern. In niedrigen Konzentrationen (vergleiche hierzu die bevorzugten Einsatzkonzentrationen weiter unten) zeigen die erfindungsgemäß zu verwendenden Propenylphenylglycoside der Formel (I) nur einen sehr schwachen Eigengeschmack. Insbesondere können die Propenylphenylglycoside der Formel (I) auch in hohe Anteile Proteine, insbesondere denaturierte Proteine oder Polysaccharide enthaltende Nahrungs- und Genussmitteln wie z.B. Joghurt-Produkte verwendet werden, insbesondere solchen mit einem pH-Wert im Bereich von 2 bis 7, bevorzugt im Bereich von 3 bis 5. Die erfindungsgemäß zu verwendenden Propenylphenylglycoside sind in wässrigen Systemen in den bevorzugten Konzentrationen klar löslich. Bevorzugte Konzentrationen liegen hierbei unter 0,05 Gew.-% (500 ppm), vorzugsweise unter 0,025 Gew.-% (250 ppm), insbesondere unter 0,02 Gew.-% (200 ppm), bevorzugt im Bereich 1 bis 250 ppm, am meisten bevorzugt im Bereich von 50 bis 200 ppm.

Die den erfindungsgemäß zu verwendenden Glycosiden zugrunde liegenden Propenylphenole, z.B. das Chavicol (4-Allylphenol), sind alleine nicht in der Lage, den beschriebenen süßverstärkenden Effekt zu bewirken. Sie sind dagegen starke Aromastoffe mit teilweise sehr unangenehmen Noten (vgl. Profil in Beispiel 1), die nicht dem süßen Aromaprofil zugeordnet werden können.

Überraschend ist, dass die Propenylphenylglycoside der Formel (I) ansonsten weitgehend geschmacklos sind, insbesondere unter dem Aspekt, dass viele β-Glucoside mit anderen als Propenyl-Substituenten im Phenylring, z.B. Salicin, 2-(Hydroxymethyl)phenyl-β-D-glucopyranosid, 4-Carbonylphenyl-β-D-glucopyranosid, 4-Ethylphenyl-β-D-glucopyranosid, 4-Methylphenyl-β-D-glucopyranosid, oder das Isomere zu Verbindung 1, 2-Allylphenyl-β-D-glucopyranosid, sehr bitter schmecken (Nicole Soranzo, Bernd Bufe, Pardis C. Sabeti, James F. Wilson, Michael E. Weale, Richard Marguerie, Wolfgang Meyerhof und David B. Goldstein, Current Biology 2005, 15, 1257-1265 und eigene sensorische Untersuchung) und daher als Aromastoffe an sich nicht geeignet sind.

Vorzugsweise wird der süße Geschmack eines süß schmeckenden Stoffes oder der süße Geruchseindruck eines Aromastoffes, der einen süßen Geruchseindruck verursacht, in einer der Ernährung, der Mundpflege oder dem Genuss dienenden Zubereitung verstärkt.

Eine bevorzugte Zubereitung ist eine Ernährung, der Mundpflege oder dem Genuss dienende Zubereitung (insbesondere in einer der vorstehend als besonders bevorzugt angegebenen Ausgestaltungen) umfassend eine Gesamtmenge von weniger als 0,05 Gew.-% (500 ppm), vorzugsweise weniger als 0,025 Gew.-% (250 ppm), an Propenylphenylglycosid der Formel (I), bezogen auf das Gesamtgewicht der Zubereitung.

Bereits in diesen geringen Konzentrationen verstärken die eingesetzten Propenylphenylglycoside oder entsprechende Mischungen signifikant den sensorischen Effekt von süß schmeckenden Stoffen oder Aromastoffen, die einen süßen Geruchseindruck verursachen.

Insbesondere bevorzugt sind der Ernährung, der Mundpflege oder dem Genuss dienende Zubereitungen (wie vorstehend beschrieben, insbesondere in als bevorzugt angegebenen Ausgestaltungen) umfassend eine Gesamtmenge im Bereich von 0,1 bis 500 ppm, bevorzugt im Bereich von 10 bis 250 ppm, besonders bevorzugt im Bereich von 50 bis 200 ppm, an Propenylphenylglycosiden umfassend, bezogen auf das Gesamtgewicht der Zubereitung.

Durch die erfindungsgemäße Verwendung von Propenylphenylglycosiden ist es insbesondere möglich, den Anteil süß schmeckender Stoffe, insbesondere aber von Zuckern wie Sucrose, Lactose, Fructose und/oder Glucose oder deren Mischungen um 5 bis 60 % (bezogen auf den bzw. die süß schmeckenden Stoffe) zu senken, verglichen mit einer Zubereitung ohne erfindungsgemäß zu verwendende Propenylphenylglycosiden, ohne dass dabei der süße Geschmackseindruck vermindert wird.

Bevorzugte erfindungsgemäße Zubereitungen, welche zuckerfrei, zuckerreduziert oder zuckerhaltig sein können und insbesondere der Ernährung, der Mundpflege oder dem Genuss dienen, sind ausgewählt aus der Gruppe bestehend aus:
(A) Süßwaren, z.B. weisse, helle oder dunkle Schokoladen, gefüllte Schokoladen (beispielsweise mit aromatisierter Fondant-Masse, Typ After-Eight), Schokoladenriegel, sonstige Riegelprodukte, Kaubonbons, Fruchtgummi, Hart- und Weichkaramellen, Kaugummi, Zuckerperlen, Lutscher), Kapseln (vorzugsweise nahtlose Kapsel zum Direktverzehr, vorzugsweise mit einer Umhüllung basierend auf Gelatine und/oder Alginat), Kaugummi (z.B. in Form von Streifen, Komprimaten, Pellets, Kissen, Kugeln, Hohlkugeln),
(B) alkoholische oder nicht-alkoholische Getränke oder Instantgetränke, insbesondere Kaffee, Tee, Wein, weinhaltige Getränke, Bier, bierhaltige Getränke, Liköre, Schnäpse, Weinbrände, fruchthaltige Limonaden, isotonische Getränke, Erfrischungsgetränke, Nektare, Obst- und Gemüsesäfte mit der Ausnahme der unveränderten Apfelsaftprodukte, Frucht- oder Gemüsesaftzubereitungen, Instant-Kakao-Getränke, Instant-Tee-Getränke, Instant-Kaffee-Getränke,
(C) Getreideprodukte und/oder Nussprodukte, insbesondere Frühstückscerealien, Cornflakes, Haferflocken, Schüttmüsli, Müsliriegel, Studentenfutter, süßes Popcorn, Nussriegel, Nuss-Frucht-Riegel, vorgegarte Fertigreis-Produkte),
(D) Milchprodukte, insbesondere Milchgetränke, Milcheis, Diäteis, Joghurt, Pudding, Kefir, Frischkäse, Weichkäse, Hartkäse, Trockenmilchpulver, Molke, Butter, Buttermilch, teilweise oder ganz hydrolysierte Milchprotein-haltige Produkte,
(E) Frucht- und/oder Gemüsezubereitungen, insbesondere Konfitüre, Diabetikermarmelade, Fruchteis, Fruchtsoßen, Fruchtfüllungen mit der Ausnahme von naturbelassenen Apfelprodukten, Ketchup, Soßen, Trockengemüse, Tiefkühlgemüse, vorgegarte Gemüse, in Essig eingelegte Gemüse, eingekochte Gemüse,
(F) Produkte auf Fett- und Ölbasis oder Emulsionen derselben, insbesondere Mayonnaise, Remoulade, Dressings, Würzzubereitungen,
(G) ein Mundpflegeprodukt (Mundhygieneprodukt), insbesondere in Form von Zahnpasta, Zahncreme, Zahngel, Zahnpulver, Zahnputzflüssigkeit, Zahnputzschaum, Mundwasser, Mundwasserkonzentrat, Zahncreme und Mundwasser als 2-in-1 Produkt, Lutschbonbon, Mundspray, Zahnseide, Kaugummi oder Zahnpflegekaugummi.

Vorzugsweise reicht die Menge an Propenylphenylglycosiden in einer erfindungsgemäßen Zubereitung aus, den süßen Geschmacks- bzw. Geruchseindruck signifikant um zumindest 10 % zu verstärken, bezogen auf eine Vergleichsformulierung, die bei ansonsten identischer Zusammensetzung keine Propenylphenylglycoside umfasst.

Besonders relevant sind somit erfindungsgemäße Zubereitungen, die zumindest einen süß schmeckenden Stoff, bevorzugt einen Zucker wie Sucrose, Lactose, Glucose und/oder Fructose, umfassen, wobei die Menge des süß schmeckenden Stoffs nicht ausreicht, um in einer Vergleichszubereitung, die kein Propenylphenylglycosid umfasst, aber ansonsten identisch zusammengesetzt ist, einem befriedigenden süßen Geschmack zu vermitteln, wobei die Menge der anwesenden Propenylphenylglycoside der Formel (I), vorzugsweise in einer der oben als bevorzugt angegebenen Ausgestaltungen) in der Zubereitung ausreicht, um den süßen Geschmackseindruck des süß schmeckenden Stoffes sensorisch zu verstärken, vorzugsweise soweit, dass insgesamt ein befriedigender süßer Geschmack vermittelt wird. Es wurde bereits oben ausgeführt, dass die Gesamtmenge an Propenylphenylglycosiden in der Zubereitung vorzugsweise ausreicht, um im Vergleich mit einer Zubereitung, die bei ansonsten identischer Zusammensetzung keine Propenylphenylglycoside, aber zumindest die 1,05-fache Menge (vorzugsweise zumindest die 1,2-fache Menge, besonders bevorzugt zumindest die 1,4-fache Menge) an Zucker umfasst, den gleichen oder einen verstärkten Süßeeindruck zu vermitteln.

Bevorzugte erfindungsgemäße Zubereitungen sind der Ernährung, der Mundpflege oder dem Genuss dienende Zubereitungen, hinsichtlich deren Zusammensetzungen das vorgesagte gilt.

Die erfindungsgemäßen der Ernährung, der Mundpflege oder dem Genuss dienenden Zubereitungen sind regelmäßig Produkte, die dazu bestimmt sind, in die menschliche Mundhöhle eingebracht zu werden, dort eine bestimmte Zeit zu verbleiben und anschließend entweder verzehrt (z.B. verzehrfertige Lebensmittel) oder wieder aus der Mundhöhle entfernt zu werden (z.B. Kaugummis oder Zahnpasta). Es versteht sich, dass der Einsatz der erfindungsgemäß zu verwendenden Propenylphenylglycoside der Formel (I) für jede Art solcher Produkte vorgesehen ist. Zu diesen Produkten gehören dabei sämtliche Stoffe oder Erzeugnisse, die dazu bestimmt sind, in verarbeitetem, teilweise verarbeitetem oder unverarbeitetem Zustand vom Menschen in die Mundhöhle aufgenommen zu werden. Hierzu zählen auch Stoffe, die Lebensmitteln bei ihrer Herstellung, Verarbeitung oder Bearbeitung zugesetzt werden und dazu vorgesehen sind, in die menschliche Mundhöhle eingebracht zu werden.

Es versteht sich, dass die erfindungsgemäß zu verwendenden Propenylphenylglycosiden der Formel (I) insbesondere in Lebensmitteln eingesetzt werden können. Im Rahmen des vorliegenden Textes werden unter einem "Lebensmittel" insbesondere Stoffe verstanden, die dazu bestimmt sind, in unverändertem, zubereitetem oder verarbeitetem Zustand vom Menschen geschluckt und dann verdaut zu werden; als Lebensmittel werden insoweit auch Umhüllungen, Überzüge oder sonstige Umschließungen verstanden, die dazu bestimmt sind, mitverschluckt zu werden, oder bei denen ein Verschlucken vorauszusehen ist. Auch bestimmte Produkte, die üblicherweise wieder aus der Mundhöhle entfernt werden (z.B. Kaugummis) sind im Rahmen des vorliegenden Textes als Lebensmittel zu verstehen, da bei ihnen nicht auszuschließen ist, dass sie zumindest teilweise geschluckt werden.

Insbesondere werden die erfindungsgemäß zu verwendenden Propenylphenylglycoside in verzehrfertigen Lebensmitteln eingesetzt. Unter einem verzehrfertigen Lebensmittel ist hierbei ein Lebensmittel zu verstehen, das hinsichtlich der für den Geschmack maßgeblichen Substanzen bereits vollständig zusammengesetzt ist. Unter den Begriff "verzehrfertiges Lebensmittel" fallen auch entsprechende Getränke sowie feste oder halbfeste verzehrfertige Lebensmittel. Als Beispiele seien genannt Tiefkühlprodukte, die vor dem Verzehr aufgetaut und auf Verzehrtemperatur erwärmt werden müssen. Auch Produkte wie Joghurt oder Eiscreme aber auch Kaugummis oder Hartkaramellen zählen zu den verzehrfertigen Lebensmitteln.

Die erfindungsgemäß zu verwendenden Propenylphenylglycoside können auch in Lebensmittel-Halbfertigwaren eingesetzt werden. Der Begriff Lebensmittel-Halbfertigware bezieht sich hierbei auf Lebensmittel, die dazu bestimmt sind, erst im weiter verarbeiteten Zustand, nach Hinzufügen von für den sensorischen Eindruck (mit)entscheidenden Aroma- oder Geschmacksstoffen verzehrt zu werden.

Unter einer der Mundpflege dienenden Zubereitung (Mundpflegeprodukt, auch Mundhygieneprodukt oder mundhygienische Zubereitung genannt) im Sinne der Erfindung wird eine Zubereitung zur Reinigung und Pflege der Mundhöhle und des Rachenraumes sowie zur Erfrischung des Atems verstanden. Hierbei ist die Pflege der Zähne und des Zahnfleisches ausdrücklich eingeschlossen. Darreichungsformen gebräuchlicher mundhygienischer Formulierungen sind Cremes, Gele, Pasten, Schäume, Emulsionen, Suspensionen, Areosole, Sprays als auch Kapseln, Granulate, Pastillen, Tabletten, Bonbons oder Kaugummis, ohne dass diese Aufzählung für die Zwecke dieser Erfindung limitierend verstanden werden soll.

Weitere übliche Wirk-, Grund-, Hilfs- und Zusatzstoffe für der Ernährung, der Mundpflege oder dem Genuss dienende erfindungsgemäße Zubereitungen können in Mengen von 5 bis 99,999999 Gew.-%, vorzugsweise 10 bis 80 Gew.-%, bezogen auf das Gesamtgewicht der Zubereitung, enthalten sein. Ferner können die Zubereitungen Wasser in einer Menge bis zu 99,999999 Gew.-%, vorzugsweise 5 bis 80 Gew.-%, bezogen auf das Gesamtgewicht der Zubereitung, aufweisen.

Die vorliegende Erfindung betrifft insbesondere eine der Ernährung, der Mundpflege oder dem Genuss dienende Zubereitung umfassend
eine Komponente (a), die ein oder mehrere Propenylphenylglycoside der Formel I umfasst oder aus ein oder mehreren Propenylphenylglycosiden der Formel I besteht,
eine Komponente (b) (d. h. eine oder mehrere süß schmeckende Stoffe), umfassend oder bestehend aus einem oder mehreren Zuckern,
sowie gegebenenfalls
Komponente (c) (d. h. einen oder mehrere Aromastoffe, die einen süßen Geruchseindruck verursachen)
wobei die Gesamtmenge an Komponente (a) in der Zubereitung (d. h. die Gesamtmenge an Propenylphenylglycosiden der Formel (I) wie oben beschrieben,)
ausreicht, um im Vergleich mit einer Zubereitung die bei ansonsten identischer Zusammensetzung keine (i) Propenylphenylglycoside der Formel (I), aber zumindest die 1,05-fache Menge an Zucker umfasst, den gleichen oder einen verstärkten Süßeeindruck zu vermitteln
und/oder
im Bereich von 0,1 bis 500 ppm, vorzugsweise 1 bis 250 ppm, besonders bevorzugt 50 bis 200 ppm liegt.

Bevorzugte erfindungsgemäße Zubereitungen sind Halbfertigwaren, Riech-, Aroma- oder Geschmacksstoffkompositionen oder Würzmischungen.

Der Begriff Halbfertigwaren umfasst hierbei insbesondere Lebensmittel-Halbfertigwaren, siehe dazu oben.

Erfindungsgemäße Halbfertigwaren können auch in sprühgetrockneter Form vorliegen. Erfindungsgemäße Zubereitungen können auch in Form von Kapseln, Tabletten (nichtüberzogene sowie überzogene Tabletten, z.B. magensaftresistente Überzüge), Dragees, Granulaten, Pellets, Feststoffmischungen, Dispersionen in flüssigen Phasen, als Emulsionen, als Pulver, als Lösungen, als Pasten oder als andere schluck- oder kaubare Zubereitungen als Nahrungsergänzungsmittel vorliegen.

Erfindungsgemäße Zubereitungen, die als Halbfertigwaren vorliegen, können insbesondere zur Verstärkung des süßen Geschmackseindrucks von der Ernährung, der Mundpflege oder dem Genuss dienenden Fertigware-Zubereitungen dienen, die unter Verwendung der Halbfertigware-Zubereitung hergestellt werden.

Erfindungsgemäße sprühgetrocknete feste Zubereitungen als Halbfertigwaren sind besonders gut zur Herstellung von erfindungsgemäßen Zubereitungen geeignet, die insbesondere der Ernährung der Mundpflege oder dem Genuss dienen können. In den sprühgetrockneten Halbfertigwaren wird nämlich die Löslichkeit der erfindungsgemäß zu verwendenden Propenylphenylglycosiden der Formel (I) durch die Träger- und/oder Hilfsstoffe, insbesondere durch Maltodextrin, Stärke, natürliche oder künstliche Polysaccharide und/oder Pflanzengummen wie modifizierte Stärken oder Gummi Arabicum wesentlich verbessert. In den erfindungsgemäßen sprühgetrockneten festen Halbfertigwaren sind vorzugsweise 50 bis 95 Gew.-% Trägerstoffe, insbesondere Maltodextrin und/oder Stärke, 5 bis 40 Gew.-% Hilfsstoffe, bevorzugt natürliche oder künstliche Polysaccharide und/oder Pflanzengummen wie modifizierte Stärken oder Gummi Arabicum und 1 bis 45 Gew.-% an erfindungsgemäß zu verwendenden Propenylphenylglycosiden der Formel (I) enthalten, bezogen auf die Gesamtmenge der sprühgetrockneten festen Zubereitung.

Erfindungsgemäße Zubereitungen, die aus der Gruppe bestehend aus Halbfertigwaren, Riech-, Aroma- oder Geschmacksstoffkompositionen oder Würzmischungen ausgewählt sind, umfassen vorzugsweise eine Gesamtmenge im Bereich von 0,0001 Gew.-% bis 95 Gew.-%, bevorzugt 0,001 Gew.-% bis 80 Gew.-%, besonders bevorzugt 0,001 Gew.-% bis 50 Gew.-%, an Propenylphenylglycosiden der Formel (I), bezogen auf das Gesamtgewicht der Zubereitung.

Bevorzugt können die erfindungsgemäßen Zubereitungen auch eine Aromakomposition enthalten, um den Geschmack und/oder Geruch der Zubereitung abzurunden und zu verfeinern. Geeignete Aromakompositionen enthalten z.B. synthetische, natürliche oder naturidentische Aroma-, Riech- und Geschmacksstoffe sowie geeignete Hilfs- und Trägerstoffe. Besonders bevorzugt sind erfindungsgemäße Zubereitungen, die einen oder mehrere Aromastoffe, die einen "süßen" Geruchseindruck verursachen, enthalten (siehe dazu oben).

Erfindungsgemäße Halbfertigwaren umfassen regelmäßig weitere Geschmacks- und/oder Aromastoffe, insbesondere Aromastoffe die einen süßen Geruchseindruck verursachen (vergleiche weiter oben), sowie geeignete Lösungsmittel (z.B. Ethanol, Glycerin, 1,2-Propylenglycol, Alkylester von Milchsäure, Ethylester von organischen Fruchtsäuren wie Diethylmalonat, Diethyltartrat, Diethylmalat, Triethylcitrat, Diethylsuccinat, Diethylfumarat, Diethylmaleat) und weitere Hilfsstoffe (z.B. Farbstoffe, Pigmente, Antioxidantien, Konservierungsmittel, Emulgatoren, Viskositätsbeeinflussende Stoffe).

Erfindungsgemäße sprühgetrocknete feste Halbfertigwaren umfassen vorzugsweise 1 bis 50 Gew.-% erfindungsgemäß zu verwendende Propenylphenylglycosiden der Formel (I), bezogen auf das Gesamtgewicht der Zubereitung, 0 bis 10 Gew.-%, vorzugsweise 1 bis 10 Gew.-% sonstige Aromen, 50 bis 99 Gew.-% Trägerstoffe und 0 bis 50 Gew.-% vorzugsweise 1 bis 50 Gew.-% weitere Hilfsmittel und/oder Stabilisatoren, jeweils bezogen auf das Gesamtgewicht der Zubereitung.

Vorteilhafte Trägerstoffe in den erfindungsgemäßen sprühgetrockneten festen Zubereitungen sind Kohlenhydrate und/oder Kohlenhydratpolymere (Polysaccharide). Als bevorzugte Trägerstoffe in den erfindungsgemäß einzusetzenden Aromapartikeln sind beispielsweise Hydrokolloide wie Stärken, abgebaute Stärken, chemisch oder physikalisch modifizierte Stärken, modifizierte Cellulosen, Gummi Arabicum, Ghatti-Gummi, Traganth, Karaya, Carrageenan, Guarkernmehl, Johannisbrotkernmehl, Alginate, Pektin, Inulin oder Xanthan Gum, Dextrine und Maltodextrine zu nennen.

Der Zersetzungsgrad der Stärke wird mit der Kennzahl "Dextrose-Equivalent" (DE) gemessen, welche die Grenzwerte 0 für das langkettige Glucosepolymer Stärke und 100 für die reine Glucose annehmen kann.

Besonders bevorzugte Trägerstoffe für die erfindungsgemäßen sprühgetrockneten festen Zubereitungen sind Maltodextrine, wobei Maltodextrine mit DE-Werten im Bereich 10 bis 30 hier wiederum vorteilhaft sind.

Es wurde bereits erwähnt, dass sprühgetrocknete feste Halbfertigwaren besonders gut zur Herstellung erfindungsgemäßer Zubereitungen geeignet sind, welche der Ernährung, der Mundpflege oder dem Genuss dienen sollen.

Wie bereits erwähnt sind die Propenylphenylglycoside der Formel (I) in üblichen (für den Verzehr geeigneten) Lösungsmitteln nicht immer gut löslich. Daher stellte sich im Rahmen der vorliegenden Erfindung die Anschlussaufgabe, die Löslichkeit der erfindungsgemäß einzusetzenden Propenylphenylglycoside der Formel (I) bzw. entsprechender Mischungen zu verbessern, insbesondere in Riech-, Aroma- oder Geschmackstoffkompositionen aber auch allgemein in der Ernährung, der Mundpflege oder dem Genuss dienenden Zubereitungen. Erfindungsgemäß wird diese Aufgabe gelöst durch den Einsatz einer zusätzlichen Komponente (d) in einer erfindungsgemäßen Zubereitung, wobei die Komponente (d) bestimmte Ester und/oder Lösungsmittel umfasst.

Eine bevorzugte erfindungsgemäße Zubereitung umfasst als zusätzliche Komponente (d)
einen oder mehrere Ester ausgewählt aus der Gruppe bestehend aus Milchsäure-C₁-C₆-Estern, Weinsäure-di-C₁-C₄-Estern, Bersteinsäure-di-C₁-C₄-Estern, Malonsäure-di-C₁-C₄-Estern, Äpfelsäure-di-C₁-C₄-Estern, Citronensäure-di-C₁-C₄-Estern und Citronensäure-tri-C₁-C₄-Estern,
und/oder
ein oder mehrere Lösungsmittel ausgewählt aus der Gruppe bestehend aus 1,2-Propylenglycol, Dimethylsulfoxid, Ethanol, und Ethanol/Wasser-Mischungen.

Neben der zusätzlichen Komponente (d) sind vorzugsweise ein oder mehrere weitere Aromastoffe vorhanden, insbesondere Aromastoffe, die einen süßen Geruchseindruck verursachen und dabei vorzugsweise aus der oben angegebenen Gruppe solcher Aromastoffe ausgewählt sind.

Besonders bevorzugt zur Erhöhung der Löslichkeit der erfindungsgemäßen einzusetzen Propenylphenylglycoside der Formel (I) bzw. deren Salzen oder entsprechenden Mischungen sind Ester ausgewählt aus der Gruppe bestehend aus Ethyllactat, n-Propyllactat, n-Butyllactat, Diethyltartrat, Dimethylsuccinat, Diethylsuccinat, Dimethylmalonat, Diethylmalonat, Dimethylmalat, Diethylmalat, und Triethylcitrat sowie das Lösungsmittel 1,2-Propylenglycol.

Erfindungsgemäße Riech-, Aroma- oder Geschmacksstoffkompositionen, welche die vorstehenden genannten Ester bzw. Lösungsmittel umfassen, bewirken eine sehr gute Löslichkeit und verhindern eine nennenswerte Neigung zur Rekristallisation der erfindungsgemäß zu verwendenden Propenylphenylglycoside der Formel (I) bzw. der entsprechenden Mischungen. Sie sind daher besonders geeignet zur Einarbeitung in erfindungsgemäße, der Ernährung, der Mundpflege oder dem Genuss dienende Zubereitungen. Hinsichtlich der bevorzugten Konzentrationen der Propenylphenylglycoside in erfindungsgemäßer Riech-, Aroma- oder Geschmacksstoffkompositionen sei auf die obigen Ausführungen verwiesen.

Erfindungsgemäße Zubereitungen, welche der Ernährung, der Mundpflege oder dem Genuss dienen, werden vorzugsweise hergestellt, indem die Propenylphenylglycoside der Formel (I) als Substanz, als Lösung (z.B. in Ethanol, Wasser, 1,2-Propylenglycol, Dimethylsulfoxid, ggf. in Anwesenheit eines der oben angegebenen Ester oder Lösungsmittel) oder in Form eines Gemisches mit einem festen oder flüssigen Trägerstoff (z.B. Maltodextrin, Stärke, Silicagel), Aromen oder Aromastoffen und gegebenenfalls weiteren Hilfsmitteln und/oder Stabilisatoren (z.B. natürliche oder künstliche Polysaccharide und/oder Pflanzengummen wie modifizierte Stärken oder Gummi Arabicum), d. h. in Form einer Halbfertigware, in einer der Ernährung, der Mundpflege oder dem Genuss dienende Basis-Zubereitung eingearbeitet werden. Vorteilhafterweise können als Lösung und/oder Suspension oder Emulsion vorliegende erfindungsgemäße Zubereitungen zunächst durch Sprühtrocknung in eine feste erfindungsgemäße Zubereitung (Halbfertigware) überführt werden, bevor diese dann wiederum zur Herstellung erfindungsgemäßer, der Ernährung, der Mundpflege oder dem Genuss dienender Zubereitungen eingesetzt wird. Hinsichtlich der besonderen Eignung sprühgetrockneter Halbfertigwaren zur Herstellung von der Ernährung, der Mundpflege oder dem Genuss dienenden Zubereitungen sei auf die obigen Ausführungen verwiesen.

Gemäß einer weiteren bevorzugten Ausführungsform werden zur Herstellung erfindungsgemäßer Zubereitungen die erfindungsgemäß zu verwendenden Propenylphenylglycoside der Formel (I) und gegebenenfalls andere Bestandteile der erfindungsgemäßen Zubereitung zunächst in Emulsionen, in Liposomen, z.B. ausgehend von Phosphatidylcholin, in Microsphären, in Nanosphären oder auch in Kapseln, Granulaten oder Extrudaten aus einer für Lebens- und Genussmittel geeigneten Matrix, z.B. aus Stärke, Stärkederivaten (z.B. modifizierte Stärke), Cellulose oder Cellulosederivaten (z.B. Hydroxypropylcellulose), anderen Polysacchariden (z.B. Dextrin, Alginat, Curdlan, Carageenan, Chitin, Chitosan, Pullulan), natürlichen Fetten, natürlichen Wachsen (z.B. Bienenwachs, Carnaubawachs), aus Proteinen, z.B. Gelatine oder sonstigen Naturprodukten (z.B. Schellack) eingearbeitet. Dabei können je nach Matrix die Produkte durch Sprühtrocknung, Sprühgranulation, Schmelzgranulation, Wirbelschichtverfahren (z.B. gemäß WO WO 97/16078 oder WO 2004/022642), Wirbelschichtsprühgranulation (z.B. gemäß WO 00/36931 oder US 4,946,654), Koazervation, Koagulation, Extrusion, Schmelzextrusion (z.B. gemäß WO 2003/092412, EP 1 123 660 oder EP 1 034 705), Emulsionsverfahren, Beschichtung (Coating) oder andere geeignete Verkapselungsverfahren und gegebenenfalls eine geeignete Kombination der vorgenannten Verfahren erhalten werden. In einem weiteren bevorzugten Herstellungsverfahren für eine erfindungsgemäße Zubereitung werden die erfindungsgemäß zu verwendenden Propenylphenylglycoside zunächst mit einem oder mehreren geeigneten Komplexbildnern, beispielsweise mit Cyclodextrinen oder Cyclodextrinderivaten, bevorzugt alpha- oder beta-Cyclodextrin, komplexiert und in dieser komplexierten Form eingesetzt.

In manchen Fällen bevorzugt ist eine erfindungsgemäße Zubereitung, bei der die Matrix so gewählt ist, dass die erfindungsgemäß zu verwendenden Propenylphenylglycoside der Formel (I) verzögert von der Matrix freigegeben werden, so dass eine langanhaltende Wirkung erzielt wird. Besonders bevorzugt ist insoweit eine Fett-, Wachs-, Polysaccharid- oder Proteinmatrix.

Als weitere Bestandteile für erfindungsgemäße, der Ernährung oder dem Genuss dienende Zubereitungen können übliche Grund-, Hilfs- und Zusatzstoffe für Nahrungs- oder Genussmittel verwendet werden z.B. Wasser, Gemische frischer oder prozessierter, pflanzlicher oder tierischer Grund- oder Rohstoffe (z.B. rohes, gebratenes, getrocknetes, fermentiertes, geräuchertes und/oder gekochtes Fleisch, Knochen, Knorpel, Fisch, Gemüse, Früchte, Kräuter, Nüsse, Gemüse- oder Fruchtsäfte oder -pasten oder deren Gemische), verdauliche oder nicht verdauliche Kohlenhydrate (z.B. Saccharose, Maltose, Fructose, Glucose, Dextrine, Amylose, Amylopektin, Inulin, Xylane, Cellulose, Tagatose), Zuckeralkohole (z.B. Sorbit, Erythritol), natürliche oder gehärtete Fette (z.B. Talg, Schmalz, Palmfett, Kokosfett, gehärtetes Pflanzenfett), Öle (z.B. Sonnenblumenöl, Erdnussöl, Maiskeimöl, Olivenöl, Fischöl, Sojaöl, Sesamöl), Fettsäuren oder deren Salze (z.B. Kaliumstearat), proteinogene oder nicht-proteinogene Aminosäuren und verwandte Verbindungen (z.B. γ-Aminobuttersäure, Taurin), Peptide (z.B. Glutahthion), native oder prozessierte Proteine (z.B. Gelatine), Enzyme (z.B. Peptidasen), Nukleinsäuren, Nucleotide, Geschmackskorrigenzien für unangenehme Geschmackseindrücke, weitere Geschmacksmodulatoren für weitere, in der Regel nicht unangenehme Geschmackseindrücke, andere geschmacksmodulierende Stoffe (z.B. Inositolphosphat, Nucleotide wie Guanosinmonophosphat, Adenosinmonophosphat oder andere Stoffe wie Natriumglutamat oder 2-Phenoxypropionsäure), Emulgatoren (z.B. Lecithine, Diacylglycerole, Gummi arabicum), Stabilisatoren (z.B. Carageenan, Alginat), Konservierungsstoffe (z.B. Benzoesäure, Sorbinsäure), Antioxidantien (z.B. Tocopherol, Ascorbinsäure), Chelatoren (z.B. Citronensäure), organische oder anorganische Säuerungsmittel (z.B. Äpfelsäure, Essigsäure, Citronensäure, Weinsäure, Phosphorsäure), Bitterstoffe (z.B. Chinin, Coffein, Limonin, Amarogentin, Humolone, Lupolone, Catechine, Tannine), mineralische Salze (z.B. Natriumchlorid, Kaliumchlorid, Magnesiumchlorid, Natriumphosphate), die enzymatische Bräunung verhindernde Stoffe (z.B. Sulfit, Ascorbinsäure), etherische Öle, Pflanzenextrakte, natürliche oder synthetische Farbstoffe oder Farbpigmente (z.B. Carotinoide, Flavonoide, Anthocyane, Chlorophyll und deren Derivate), Gewürze, trigeminal wirksame Stoffe oder Pflanzenextrakte, enthaltend solche trigeminal wirksamen Stoffe, synthetische, natürliche oder naturidentische Aromastoffe oder Riechstoffe sowie Geruchskorrigentien.

Zahnpflegemittel (als Beispiel für ein erfindungsgemäßes Mundpflegeprodukt), die erfindungsgemäß zu verwendende Propenylphenylglycosiden der Formel (I) enthalten, umfassen im Allgemeinen ein abrasives System (Schleif- oder Poliermittel), wie z.B. Kieselsäuren, Calciumcarbonate, Calciumphosphate, Alumiuniumoxide und/oder Hydroxylapatite, oberflächenaktive Substanzen wie z.B. Natriumlaurylsulfat, Natriumlaurylsarcosinat und/oder Cocamidopropylbetain, Feuchthaltemitteln wie z.B. Glycerin und/oder Sorbit, Verdickungsmittel, wie z.B. Carboxymethylcellulose, Polyethylenglycole, Carrageenan und/oder Laponite^{®}, Süßstoffe, wie z.B. Saccharin, Geschmackskorrigenzien für unangenehme Geschmackseindrücke, Geschmackskorrigenzien für weitere, in der Regel nicht unangenehme Geschmackseindrücke, geschmacksmodulierende Stoffe (z.B. Inositolphosphat, Nucleotide wie Guanosinmonophosphat, Adenosinmonophosphat oder andere Stoffe wie Natriumglutamat oder 2-Phenoxypropionsäure), Kühlwirkstoffen wie z.B. Menthol, Mentholderivate (z.B. L-Menthol, L-Menthyllactat, L-Menthylalkylcarbonate, Menthonketale, Menthancarbonsäureamide), 2,2,2-Trialkylessigsäureamiden (z.B. 2,2-Diisopropylpropionsäuremethylamid), Icilin und Icilin-Derivate, Stabilisatoren und aktive Wirkstoffe, wie z.B. Natriumfluorid, Natriummonofluorphosphat, Zinndifluorid, quartären Ammoniumfluoriden, Zinkcitrat, Zinksulfat, Zinnpyrophosphat, Zinndichlorid, Mischungen verschiedener Pyrophosphate, Triclosan, Cetylpyridiniumchlorid, Aluminiumlactat, Kaliumcitrat, Kaliumnitrat, Kaliumchlorid, Strontiumchlorid, Wasserstoffperoxid, Aromen und/oder Natriumbicarbonat oder Geruchskorrigentien.

Kaugummis (als weiteres Beispiel für der Mundpflege dienende Zubereitungen), welche die erfindungsgemäß zu verwendenden Propenylphenylglycosiden der Formel (I) enthalten, umfassen im allgemeinen eine Kaugummibase, d.h. eine beim Kauen plastisch werdende Kaumasse, Zucker verschiedener Arten, Zuckeraustauschstoffe, andere süß schmeckende Stoffe, Zuckeralkoholen, Geschmackskorrigenzien für unangenehme Geschmackseindrücke, andere Geschmacksmodulatoren für weitere, in der Regel nicht unangenehme Geschmackseindrücke, geschmacksmodulierende Stoffe (z.B. Inositolphosphat, Nucleotide wie Guanosinmonophosphat, Adenosinmonophosphat oder andere Stoffe wie Natriumglutamat oder 2-Phenoxypropionsäure), Feuchthaltemittel, Verdicker, Emulgatoren, Aromen und Stabilisatoren oder Geruchskorrigentien.

Eine besonders bevorzugte erfindungsgemäße Zubereitung umfasst zumindest eine weitere Substanz zum Maskieren oder Vermindern eines bitteren, metallischen, kalkigen, sauren oder adstringierenden Geschmackseindrucks oder zum Verstärken eines süßen, salzigen oder Umami-Geschmackseindrucks. Es werden somit eines oder mehrere der erfindungsgemäß zu verwendenden Propenylphenylglycosiden der Formel (I) oder entsprechenden Mischungen in Kombination mit zumindest einer (weiteren) zur Maskierung oder Verminderung eines unangenehmen (bitteren, kalkigen, sauren, adstringierenden) Geschmackseindrucks oder zur Verstärkung eines angenehmen Geschmackseindrucks (süß, salzig, Umami) geeigneten Substanz verwendet. Diese speziellen Zubereitungen sind hervorragend geeignet, eine besonders wirksame Verstärkung der Süße in den erfindungsgemäßen Zubereitungen, enthaltend süß schmeckende Stoffe, zu erreichen. Insbesondere die Kombination der erfindungsgemäß einzusetzenden Propenylphenylglycosiden der Formel (I) mit Geschmackskorrigenzen für unangenehme, insbesondere bittere Geschmackseindrücke, oder Geschmacksverstärkern für angenehme, insbesondere süße Geschmackseindrücke, ist bevorzugt.

Besonders bevorzugt sind erfindungsgemäße Zubereitungen, die Hesperetin und/oder Phloretin oder deren Salze umfassen.

Eine besonders bevorzugte Kombination ergibt sich somit durch die Verwendung der Propenylphenylglycoside der Formel (I) zusammen mit Hesperetin und/oder Phloretin oder deren Salzen zur Süßverstärkung der oben genannten süß schmeckenden Stoffe, insbesondere von Zuckern. Hinsichtlich der süßverstärkenden Wirkung (i) von Hesperetin wird hierbei auf PCT/EP2006/06433 und die hierauf basierenden Dokumente (Symrise), von Phloretin auf die US Provisional Application 60/784,444 und die hierauf basierenden Dokumente (Symrise) verwiesen. Der Gesamtgehalt an Propenylphenylglycosiden der Formel (I) beträgt hierbei vorzugsweise höchstens 0,02 Gew.-% (200 ppm) und der Gesamtgehalt an Hesperetin bzw. Phloretin vorzugsweise höchstens jeweils 0,01 Gew.-% (100 ppm), jeweils bezogen auf das Gesamtgewicht der Zubereitung. Die angegebenen Gesamtgehalte beziehen sich hierbei auf gebrauchsfertige, der Ernährung, der Mundpflege oder dem Genuss dienende Zubereitungen. In Halbfertigwaren, Riech-, Aroma oder- Geschmackstoffkompositionen wird der Gesamtgehalt entsprechend deutlich höher liegen. Das Verhältnis der Gesamtmenge der Propenylphenylglycoside der Formel (I) zu der Gesamtmenge an eingesetztem Hesperetin bzw. Phloretin bzw. deren Salzen liegt dabei vorzugsweise im Bereich von 1000 : 1 bis 1 : 1000, bevorzugt im Bereich von 10 : 1 bis 1 : 10, besonders bevorzugt im Bereich von 5 : 1 bis 1 : 5, und insbesondere bevorzugt im Bereich von 7 : 3 bis 3 : 7, wobei das Verhältnis von Hesperetin zu Phloretin bzw. deren Salzen vorzugsweise im Bereich von 1000 : 1 bis 1 : 1000, bevorzugt im Bereich von 10 : 1 bis 1 : 10, besonders bevorzugt im Bereich von 5 : 1 bis 1 : 5, und insbesondere bevorzugt im Bereich von 7 : 3 bis 3 : 7 liegt.

Hesperetin hat folgende Strukturformel:

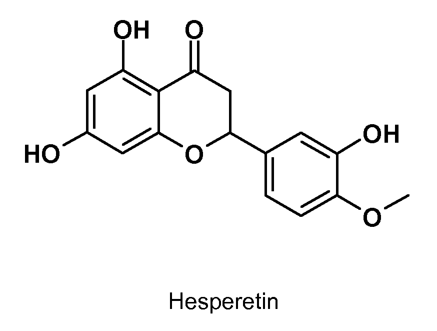

Phloretin hat folgende Strukturformel: 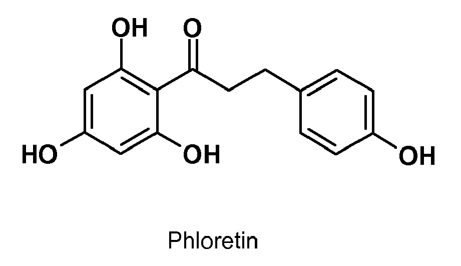 wobei das Hesperetin und/oder dessen Salze (insbesondere in Form der Na⁺, K⁺, NH₄⁺, Ca²⁺, Mg²⁺, Al³⁺ und/oder Zn²⁺ - Salze) als (2S)-Enantiomer, (2R)-Enantiomer oder beliebige Mischung der Enantiomere vorliegen kann, bevorzugt in einer Mischung, die gleiche Teile der Enantiomere enthält oder in der das (2S)-Enantiomer mehr als 50 % des Gesamtgewichts der Hesperetinenantiomere ausmacht.

Die (weiteren) Geschmackskorrigenzien werden z. B. aus der folgenden Liste ausgewählt: Nucleotide (z.B. Adenosin-5'-monophosphat, Cytidin-5'-monophosphat) oder deren pharmazeutisch akzeptable Salze, Lactisole, Natriumsalze (z.B. Natriumchlorid, Natriumlactat, Natriumcitrat, Natriumacetat, Natriumgluconoat), weitere Hydroxyflavanone (z.B. Eriodictyol, Homoeriodictyol oder deren Natriumsalze), insbesondere gemäß US 2002/0188019, Hydroxybenzoesäureamide nach DE 10 2004 041 496 (z.B. 2,4-Dihydroxybenzoesäurevanillylamid, 2,4-Dihydroxybenzoesäure-N-(4-hydroxy-3-methoxybenzyl)amid, 2,4,6-Trihydroxybenzoesäure-N-(4-hydroxy-3-methoxybenzyl)amid, 2-Hydroxy-benzoesäure-N-4-(hydroxy-3-methoxybenzyl)amid , 4-Hydroxybenzoesäure-N-(4-hydroxy-3-methoxybenzyl)amid, 2,4-Dihydroxybenzoesäure-N-(4-hydroxy-3-methoxybenzyl) amid-Mono-natriumsalz, 2,4-Dihydroxybenzoesäure-N-2-(4-hydroxy-3-methoxyphenyl)ethylamid, 2,4-Dihydroxybenzoesäure-N-(4-hydroxy-3-ethoxybenzyl)amid, 2,4-Dihydroxybenzoesäure-N-(3,4-dihydroxybenzyl)amid und 2-Hydroxy-5-methoxy-N-[2-(4-hydroxy-3-methoxyphenyl)ethyl]amid (Aduncamid), 4-Hydroxybenzoesäurevanillylamid), bittermaskierende Hydroxydeoxybenzoine gemäß PCT/EP2006/060591 (US Provisional Application 60/668,189) sowie den darauf basierenden Dokumenten (Symrise) (z.B. 2-(4-Hydroxy-3-methoxyphenyl)-1-(2,4,6-trihydroxyphenyl)ethanon, 1-(2,4-Dihydroxyphenyl)-2-(4-hydroxy-3-methoxyphenyl)ethanon, 1-(2-Hydroxy-4-methoxyphenyl)-2-(4-hydroxy-3-methoxyphenyl)ethanon), Aminosäuren (z.B. gamma-Aminobuttersäure nach WO 2005/096841 zur Verminderung oder Maskierung eines unangenehmen Geschmackseindrucks wie Bitterkeit), Äpfelsäureglycoside nach WO 2006/003107, salzig schmeckende Mischungen gemäß US Provisional Application 60/728,744 (PCT/EP 2006/067120) sowie den darauf basierenden Dokumenten (Symrise), Diacetyltrimere gemäß WO 2006/058893 sowie den darauf basierenden Dokumenten (Symrise), Gemische von Molkeproteinen mit Lecithinen und/oder bittermaskierende Substanzen wie Gingerdione gemäß US Provisional Application 60/696,670 (PCT/EP 2006/063576) sowie den darauf basierenden Dokumenten (Symrise).

Es wurde bereits mehrfach ausgeführt, dass erfindungsgemäße Zubereitungen insbesondere aus der Gruppe ausgewählt sind, die aus der Ernährung, der Mundpflege oder dem Genuss dienenden Zubereitungen Halbfertigwaren, Riech- Aroma- oder Geschmackstoffskompositionen oder Würzmischungen besteht. Nachfolgend werden bevorzugte erfindungsgemäße Zubereitungen angegeben: Backwaren (z.B. Brot, Trockenkekse, Kuchen, Muffins, Waffeln, Backmischungen, sonstiges Gebäck), Süßwaren (z.B. weisse, helle oder dunkle Schokoladen, gefüllte Schokoladen (beispielsweise mit aromatisierter Fondant-Masse, Typ After-Eight), Schokoladenriegel, sonstige Riegelprodukte, Kaubonbons, Fruchtgummi, Hart- und Weichkaramellen, Kaugummi, Zuckerperlen, Lutscher), Kapseln (vorzugsweise nahtlose Kapsel zum Direktverzehr, vorzugsweise mit einer Umhüllung basierend auf Gelatine und/oder Alginat), Fettmassen (z.B. Backwarenfüllungen für z.B. Keksfüllungen, Schokoladenfettfüllungen, Riegelfettfüllungen), Aufstreumischungen (Toppings), alkoholische oder nicht-alkoholische Getränke (z.B. Kaffee, Tee, Wein, weinhaltige Getränke, Bier, bierhaltige Getränke, Liköre, Schnäpse, Weinbrände, fruchthaltige Limonaden, isotonische Getränke, Erfrischungsgetränke, Nektare, Obst- und Gemüsesäfte mit der Ausnahme unveränderter Apfelsaftprodukte, Frucht- oder Gemüsesaftzubereitungen), Instantgetränke oder Instantpulver (z.B. Instant-Kakao-Getränke, Instant-Tee-Getränke, Instant-Kaffeegetränke, Instant Desserts in Pulverform wie Puddingspulver oder Götterspeise), Fleischprodukte (z.B. Schinken, Frischwurst- oder Rohwurstzubereitungen, gewürzte oder marinierte Frisch- oder Pökelfleischprodukte), Eier oder Eiprodukte (z.B. Trockeneipulver), Getreideprodukte und/oder Nussprodukte (z.B. Frühstückscerealien, Cornflakes, Haferflocken, Schüttmüsli, Müsliriegel, Studentenfutter, süßes Popcorn, Nussriegel, Nuss-Frucht-Riegel, vorgegarte Fertigreis-Produkte), Milchprodukte (z.B. Milchgetränke, Milcheis, Joghurt, Pudding, Kefir, Frischkäse, Weichkäse, Hartkäse, Trockenmilchpulver, Molke, Butter, Buttermilch, teilweise oder ganz hydrolisierte Milchprotein-haltige Produkte), Produkte aus Sojaprotein oder anderen Sojabohnen-Fraktionen (z.B. Sojamilch und daraus gefertigte Produkte, Sojalecithin-haltige Zubereitungen, fermentierte Produkte wie Tofu oder Tempe oder daraus gefertigte Produkte, Sojaso-ßen), Fruchtzubereitungen (z.B. Konfitüren, Fruchteis, Fruchtsoßen, Fruchtfüllungen mit der Ausnahme von naturbelassenen Apfelprodukten), Gemüsezubereitungen (z.B. Ketchup, Soßen, Trockengemüse, Tiefkühlgemüse, vorgegarte Gemüse, in Essig eingelegte Gemüse, eingekochte Gemüse), Knabberartikel (z.B. gebackene oder frittierte Kartoffelchips oder Kartoffelteigprodukte, Brotteigprodukte, Extrudate auf Mais- oder Erdnussbasis), Produkte auf Fett- und Ölbasis oder entsprechende Emulsionen (z.B. Mayonnaise, Remoulade, Dressings, Würzzubereitungen), sonstige Fertiggerichte und Suppen (z.B. Trockensuppen, Instant-Suppen, vorgegarte Suppen), Gewürze, Würzmischungen sowie insbesondere Aufstreuwürzungen (englisch: Seasonings), die beispielsweise im Snackbereich Anwendung finden.

Erfindungsgemäße Zubereitungen können auch in Form von Kapseln, Tabletten (nichtüberzogene sowie überzogene Tabletten, z.B. magensaftresistente Überzüge), Dragees, Granulaten, Pellets, Feststoffmischungen, Dispersionen in flüssigen Phasen, als Emulsionen, als Pulver, als Lösungen, als Pasten oder als andere schluck- oder kaubare Zubereitungen als Nahrungsergänzungsmittel vorliegen.

Die vorliegende Erfindung betrifft auch ein Verfahren zum Verstärken des süßen Geschmacks oder des süßen Geruchseindruckes eines Aromastoffes, der einen süßen Geruchseindruck verursacht, mit folgendem Schritt:
- Mischen eines oder mehrerer süß schmeckender Stoffe (Komponente (b)) oder eines oder mehrerer Aromastoffe, der beziehungsweise die einen süßen Geruchseindrucks verursachen (Komponente (c)), mit einer Gesamtmenge einer Komponente (a) wie sie oben definiert ist, d. h. mit einer Gesamtmenge eines Propenylphenylglycosids der Formel (I), wobei die Gesamtmenge an Komponente (a) in der Zubereitung ausreicht, den süßen Geschmackseindruck des bzw. der süß schmeckenden Stoffe (b) bzw. den süßen Geruchseindruck des bzw. der Aromastoffe (c), die einen süßen Geruchseindruck verursachen, sensorisch zu verstärken.

Zu den bevorzugten Mengen an erfindungsgemäß zu verwendenden Propenylphenylglycosiden der Formel (I) siehe oben. Eine Gesamtkonzentration von zumindest 50 ppm und höchstens 200 ppm in einer gebrauchsfertigen, der Mundpflege dienenden Zubereitung bzw. einer verzehrfertigen, der Ernährung oder dem Genuss dienenden Zubereitung ist dabei oftmals besonders bevorzugt.

Insgesamt gelten jedoch auch für das erfindungsgemäße Verfahren die vorstehend hinsichtlich der erfindungsgemäßen Verwendung und der erfindungsgemäßen Zubereitungen gemachten Ausführungen.

### Beispiele

Die Beispiele dienen zur Verdeutlichung der Erfindung, ohne diese damit einzuschränken. Sofern nicht anders angegeben beziehen sich alle Angaben auf das Gewicht.

### Beispiel 1: Chavicol-β-D-alucopyranosid, Verbindung 1

Die Synthese erfolgte nach dem folgenden Schema über das α-Trichloracetimidat **F**:

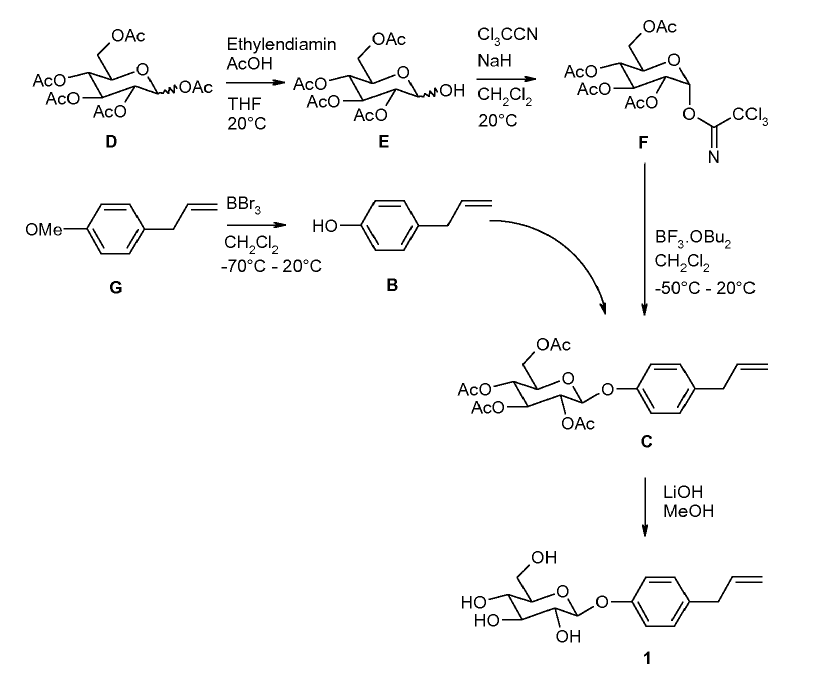

Alternativ wurde die Synthese auch über das β-Trichloracetimidat **A** (entsprechend dem untenstehenden Schema) durchgeführt. Aufgrund des Nachbarguppeneffekts der Acetylgruppe in 2-Position bei den Verbindungen **A** und **F** ergibt die Glycosidierung sowohl mit **A** als auch mit **F** das β-Anomere **C.**

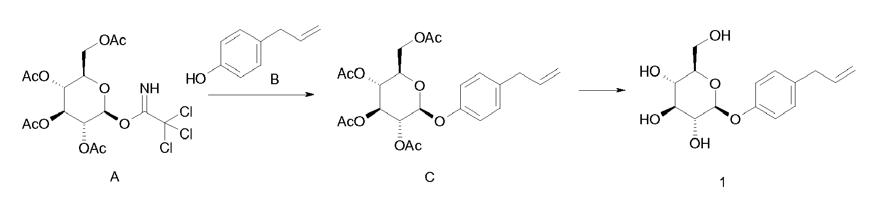

### 2,3,4,6-Tetra-O-acetyl-D-glucose, Verbindung E

Es werden 10 ml Ethylendiamin (0,15 mol, 1,5 eq) in 350 ml trockenem Tetrahydrofuran vorgelegt und unter Rühren 8,41 g konz. Essigsäure (0,14 mol, 1,4 eq) zugetropft. Man fügt 39,04 g D-Glucose-pentaacetat (0,10 mol, 1,0 eq) hinzu und rührt 24 Stunden bei Zimmertemperatur.

Das Reaktionsgemisch wird mit 250 ml Dichlormethan versetzt, mit jeweils 100 ml Wasser, 10%iger Salzsäure und gesättigter Natriumhydrogencarbonatlösung gewaschen, über Natriumsulfat getrocknet und das Lösungsmittel im Vakuum abdestilliert.

Man erhält 25,8 g einer Mischung beider Anomere der 2,3,4,6-Tetra-*O*-acetyl-D-Glucose mit einer Reinheit >90% (NMR). Anomerenverteilung ca. α/β =3/1.

¹H-NMR (CDCl₃, 400 MHz): δ = 2.02 (s, 3 H), 2.04 (s, 3 H), 2.09 (s, 3 H), 2.10 (s, 3 H), 3.73-3.79 (m, 1 Hα), 4.11- 4.18 (m 1 H), 4.21-4.30 (m, 2 H), 4.76 (d, *J* = 8.0 Hz, 1 Hβ), 4.89 (dd, *J* = 3.6, 10,3 Hz, 1 Hα),.4.90 (dd, *J* = 8.0, 9.8 Hz, 1 Hβ), 5.09 (dd, *J* = 9.4, 10.1 Hz, 1 H), 5.25 (dd, *J* = 9.7, 9.4 Hz, 1 Hβ), 5,46 (d, *J* = 3.6 Hz, 1 Hα), 5.54 (dd, *J* = 9.4, 10.2 Hz, 1 H).

α-Anomer, ¹³C-NMR (100 MHz, CDCl₃): δ = 20.6, 20.7, 20.7, 20.8 (*C*H₃), 62.0 (*C*H₂), 67.1, 68.5, 69.9, 71.2, 90.1 (*C*H), 169.7, 170.3, 170.3, 171.0 (*C*).

β-Anomer, ¹³C-NMR (100 MHz, CDCl₃): δ = 20.6, 20.7, 20.7, 20.8 (*C*H₃), 62.0 (*C*H₂), 68.4, 72.0, 72.3, 73.2, 95.5 (*C*H), 169.6, 170.3, 170.8, 170.9 (*C*).

### 2,3,4,6-Tetra-O-acetyl-α-D-glucopyranosyl-trichloracetimidat, Verbindung F

25,8 g 2,3,4,6-Tetra-*O*-acetyl-D-Glucose (74 mmol, 1,0 eq) und 22,3 ml Trichloracetonitril (222 mmol, 3,0 eq) werden in 150 ml trockenem Dichlormethan vorgelegt. Unter Rühren werden bei -5 °C vorsichtig 3,0 g Natriumhydrid (125 mmol, 1,7 eq) zugesetzt. Nach 30 min wird überschüssiges Natriumhydrid über Kieselgur abfiltriert und das Filtrat im Vakuum eingeengt.

Das Rohprodukt wird mit Diethylether an Kieselgel 60 chromatographiert. Man erhält ca. 8,5 g 2,3,4,6-Tetra-O-acetyl-α-D-glucopyranosyl-trichloracetimidat **F**.

(R. R. Schmidt, M. Stumpp, Liebigs Ann. Chem. 1983, 1249-1256)

¹H-NMR (CDCl₃, 400 MHz): δ = 2.02 (s, 3 H), 2.04 (s, 3 H), 2.05 (s, 3 H), 2.08 (s, 3 H), 4.13 (dd, *J* = 2.1, 12.3 Hz, 1 H), 4.20-4.25 (m, 1 H), 4.28 (dd, *J* = 3.7, 12.3 Hz, 1 H), 5.14 (dd, *J =* 3.7, 10.2 Hz, 1 H), 5.19 (dd, *J =* 9.5, 10.1 Hz, 1 H), 5,57 (dd, *J* = 9.9, 10.1 Hz), 6.57 (d, J = 3.7 Hz, 1 H), 8.70 (s, 1 H, N-H).

¹³C-NMR (100 MHz, CDCl₃): δ = 20.5, 20.6, 20.7, 20.7 (*C*H₃), 61.4 (*C*H₂), 67.8, 69.7, 69.9, 70.0 (*C*H), 90.7 (*C*), 92.9 (*C*H), 160.8, 169.5, 169.9, 170.0, 170.6 (*C*).

### 4-Allylphenol, Chavicol, Verbindung B

7,41 g 4-Allylanisol **G** (0,05 mol, 1,0 eq) werden in 100 ml Dichlormethan vorgelegt. Man tropft unter Rühren bei -65 bis - 70°C 50 ml einer 1,0 M Lösung von Bortribromid (0,05 mol, 1,0 eq) in Dichlormethan zu und lässt die Rektionstemperatur innerhalb von 2 h auf Zimmertemperatur ansteigen. Die Reaktion wird durch sehr vorsichtige Zugabe von 25 ml Eis und 25 ml Eiswasser beendet.

Man extrahiert die organische Phase zweimal mit je 30 ml 10%iger Natronlauge (0,15 mol), wäscht diese einmal mit 75 ml Diethylether und säuert mit 70 ml 10%iger Salzsäure an. Die Lösung wird durch Zugabe von Kochsalz gesättigt und das 4-Allylphenol mit 2 x 75 ml Diethylether extrahiert.

Man trocknet die organische Phase über Natriumsulfat und destilliert das Lösungsmittel im Vakuum ab. Man erhält ca. 7,0 g 4-Allylphenol **B** mit einer Reinheit von ca. 90% (GC).

¹H-NMR (CDCl₃, 400 MHz): δ = 3.31 (d, *J* = 6.67 Hz, 2 H), 5.02-5.08 (m, 3 H), 5.94 (mc, 1 H), 6.74-6.78 (m, 2 H), 7.02-7.07 (m, 2 H).

¹³C-NMR (100 MHz, CDCl₃): δ = 39.3 (*C*H₂), 115.3 (2 x *C*H), 115.5 (*C*H₂), 129.7 (2 x *C*H), 132.3 (*C*), 137.8, 137.8 (*C*H), 153.7 (*C*).

### 2,3,4,6-Tetra-O-acetyl-β-D-glucopyranosyl-4-allylbenzol, Verbindung C

Es werden 8,5 g 2,3,4,6-Tetra-*O*-acetyl-α-D-glucopyranosyl-trichloracetimidat **F** (17,2 mmol, 1,0 eq), 2,58 g 4-Allyl-phenol **B** (17,2 mmol, 1,0 eq) und 10 g Molekularsieb 4 Å in 150 ml trockenem Dichlormethan vorgelegt. Man kühlt auf -50 °C ab und tropft unter Rühren 0,68 g Bortrifluorid-diethyletherat (3,44 mmol, 0,2 eq) zu. Es wird 1 h bei -50°C und 16 h bei Zimmertemperatur gerührt. Man filtriert vom Molekularsieb ab, wäscht mit 75 ml gesättigter Natriumhydrogencarbonatlösung, trocknet über Natriumsulfat und destilliert das Lösungsmittel im Vakuum ab.

Das Rohprodukt wird in 30 ml Ethanol gelöst und bei 5 °C stehen gelassen. Man filtriert die Kristalle ab und erhält nach Trocknung im Vakuum ca. 4,5 g 2,3,4,6-Tetra-*O*-acetyl-β-D-glucopyranosyl-4-allylbenzol **C.**

¹H-NMR (400 MHz, CDCl₃): δ = 2.04 (s, 3 H), 2.05 (s, 3 H), 2.06 (s, 3 H), 2.08 (s, 3 H), 3.34 (d, *J* = 6.7 Hz, 2 H), 3.84 (ddd, 2.4, 5.3, 10.0 Hz, 1 H), 4.17 (dd, *J* = 2.4, 12.2 Hz, 1 H), 4.28 (dd, *J* = 5.3, 12,2 Hz, 1 H), 5.93 (m, 1 H), 5.03- 5.09 (m, 3 H), 5.17 (m_{c}, 1 H), 5.23-5.32 (m, 2 H), 6.91-6.94 (m, 2 H), 7.09-7.13 (m, 2 H).

¹³C-NMR (100 MHz, CDCl₃): δ = 20.6, 20.6, 20.7, 20.7 (*C*H₃), 39.4, 62.0 (*C*H₂), 68.3, 71.2, 72.0, 72.8, 99.4 (*C*H), 115.8 (2 x *C*H), 117.1 (CH₂), 129.6 (2 x *C*H₂), 135.1 (*C*), 137.4 (*C*H), 155.3, 169.4, 169.5, 170.3, 170.7 (*C*).

### Chavicol-β-D-glucopyranosid, Verbindung 1

Eine Mischung aus 4,5 g 2,3,4,6-Tetra-*O*-acetyl-β-D-glucopyranosyl-4-allylbenzol (9,2 mmol), 25 mg Lithiumhydroxyd und 75 ml Methanol wird 24 h bei Zimmertemperatur gerührt. Das Lösungsmittel wird im Vakuum abdestilliert und das Rohprodukt durch präparative HPLC aufgereinigt. Man erhält ca. 1,07 g Chavicol-β-D-glucopyranosid 1 (D-Glucopyranosyl-4-allylbenzol).

HPLCMS (C18, 0,2 ml/min, H₂O/HCOOH/Acetonitril 80:20 bis 0:100 in 35 min, APCI-): RT 9,3 min, *m*/*z* = 341,1 (100 %, [(M+HCOOH)-H]⁻).

¹H-NMR (400 MHz, d₆-DMSO): δ = 7,09 (2H, m, H-3, 5), 6,96 (2H, m, H-2, 6), 5,93 (1 H, ddt, J = 17 Hz, *J* = 10,1 Hz, *J* = 6,8 Hz, H-8), 5,28 (1 H austauschbar, d, *J* = 4,9 Hz, OH), 5,04 (2H, ddt, J = 17 Hz, *J* = 2,1 Hz, *J* = 1,6 Hz, H-8a), 5,02 (1 H, ddt, *J* = 10,1 Hz, *J =* 2,2 Hz, *J =* 1,3 Hz, H-8b), 4,80 (1 H, d, J = 7,4 Hz, H-1'), 4,56 (1 H austauschbar, dd, J = 6,2 Hz, 5,3 Hz, OH), 3,68 (1 H, ddd, J = 11,8 Hz, J = 5,3 Hz, J = 2,1 Hz, H-6'a), 3,48-3,42 (1 H, m, H-6'b), 3,39-3,20 (m) ppm.

¹³C-NMR (100 MHz, d₆-DMSO): δ = 155,72 (C, C-1), 137,92 (CH, C-7), 132,80 (C, C-4), 129,16 (2×CH, C-3, C-5), 116,16 (2×CH, C-2, C-6), 115,36 (CH₂, C-9), 100,47 (CH, C-1'), 76,91 (CH, C-5'), 76,54 (C, C-3'), 73,15 (CH, C-2'), 69,65 (CH, C-4'), 60,62 (CH₂, C-6') ppm.

### Chavicol-β-D-glucopyranosid, Verbindung 1, alternative Synthese über das β-Trichloracetimidat A:

Tetra-O-acetyl-β-D-glucopyranosyl-1-O-trichloracetimidat (Verbindung A, hergestellt nach R.R. Schmidt, J. Michel, M Roos, Liebigs Ann. Chem. 1984, 1343-1357;, 21,9 g, 50 mmol) wird mit Chavicol (4-Allylphenol, Verbindung B, 7,2 g, 55 mmol) in Dichlormethan (400 ml) unter Stickstoff vorlgelegt und 25 g gepulvertes, aktiviertes Molsieb (Porengröße 40 nm) zugegeben. Die Reaktionsmischung wird auf -50 °C gekühlt und unter Schutzgas mit Hilfe einer Spritze/Kanüle innerhalb einer Stunde BF₃-Diethyletherat (1,99 g, 10 mmol) zudosiert. Danach wird die Mischung auf Raumtemperatur erwärmen gelassen, das Molsieb abfiltriert, der Rückstand mit etwas Dichlormethan nachgewaschen und die organische Phase mit gesättigter NaHCO₃-Lsg. gewaschen, über Na₂SO₄ getrocknet, filtriert und im Vakuum eingeengt. Das kristalline Rohprodukte (28 g) wird in Ethanol (60 ml) 30 min ausgerührt und nach Lagerung bei 5°C filtriert und die als farblose, kristalline Masse vorliegende Verbindung C getrocknet (18,0 g, 78 % der Theorie). Verbindung C (17,9 g, 38,6 mmol) wird in Methanol (50 ml) gelöst und Lithiumhydroxid (100 mg) zugegeben. Die Mischung wird insgesamt 24 h gerührt und dann im Vakuum eingedampft. Man erhält 15,5 g Rohprodukt, das aus Methanol in der Hitze umkristallisiert wird. Chavicol-β-D-glucopyranosid (Verbindung 1) fällt in Form farbloser, nadelförmiger Kristalle an.

### Ausbeute: 10,9 g , (37 mmol, 74 % der Theorie bezogen auf Verbindung A)

### Anwendungsbeispiel 1: Verstärkung des Süßeindrucks einer Sucrose enthaltenden Modellanwendung

Sensorisches Profil von 100 ppm Chavicol-β-D-glucopyranosid (Verbindung 1 aus Beispiel 1) in 5 Gew.-%iger, wässriger Zuckerlösung (Sucrose): schwach staubig-trocken, sonst neutral.

Sensorisches Profil von 100 ppm Chavicol-β-D-glucopyranosid (Verbindung 1 aus Beispiel 1) in wässriger Lösung: nahezu neutral, schwach staubig-trocken

Vergleich: sensorisches Profil von 2 ppm Chavicol (Verbindung B aus Beispiel 1) in 5 Gew.-%iger, wässriger Zuckerlösung (Sucrose): Kresolnote, Gummi, unangenehm

Um die Verstärkung eines Süß-Eindrucks durch Zusatz der erfindungsgemäß zu verwendenden Propenylphenylglycoside zu quantifizieren, wurden die Süßen Sucrose enthaltenden Joghurts (0,5 % Fettgehalt) und von Proben, die gleiche Menge Sucrose und zusätzlich eine bestimmte Konzentration der erfindungsgemäß zu verwendenden Propenylphenylglycoside der Formel (I) enthielten, von einer Expertengruppe bestimmt (Einstufung 1 [äußerst schwach süß] bis 10 [extrem süß]). Die Auswertung erfolgte als Berechnung der Verstärkung (in %) des Süßeindrucks aus den Durchschnittswerten der Einschätzungen der Sucrose enthaltenden (a) bzw. der Sucrose und Propenylphenylglycoside enthaltenden Joghurts (b).

| **Substanz, Konzentration in Joghurt (0,5 % Fettgehalt)** | **süß schmeckender Stoff, Konzentration** | **Süß-Eindruck (1-10)** | | **% Verstärkung des SüßEindrucks** |
|---|---|---|---|---|
| | | **a) ohne** | **b) mit** | |
| Verbindung 1, 200 ppm | Sucrose, 5 % | 3,9 ± 1,1 | 4,9 ± 1,4 | + 24 % (16/10), p < 0,05 |

Chavicol als solches wurde nicht analog getestet, da der intrinsische Aromaeindruck schon bei 2 ppm sehr stark und störend war und sich damit diese Verbindung für den süßverstärkenden Effekt nicht brauchbar erwies. Von einer Verkostung einer äquivalenten Menge Glucose (200 ppm entsprechend 0,02 Gew.-%) wurde Abstand genommen, da entsprechende absolute oder zur schon vorhandenen Sucrose addierte Mengen keine sensorische Relevanz aufweisen.

### Anwendungsbeispiel 2: Sprühgetrocknete Zubereitungen als Halbfertigwaren zur Aromatisierung von Fertigwaren

| | **Zubereitung (Einsatz in Gew.-%)** | | | | | | |
|---|---|---|---|---|---|---|---|
| **Inhaltsstoff** | **A** | **B** | **C** | **D** | **E** | **F** | **G** |
| Trinkwasser | 60,8 % | 60,8 % | 60,8 % | 60,8 % | 60,8 % | 60,8 % | 60,8 % |
| Maltodextrin aus Weizen | 24,3 % | 24,3 % | 24,3 % | 24,3 % | 24,3 % | 24,3 % | 24,3 % |
| Gummi Arabicum | 6,1 % | 6,1 % | 6,1 % | 6,1 % | 6,1 % | 6,1 % | 6,1 % |
| Verbindung 1 | 8,8 % | 4,4 % | 4,4 % | 2,2 % | 4,4 % | 5,5 % | 1,1 % |
| Phloretin | - | 4,4 % | - | 2,2 % | 2,2 % | 1,1 % | 3,3 % |
| Hesperetin | - | - | 4,4 % | 4,4 % | 2,2 % | 2,2 % | 4,4 % |

Das Trinkwasser wird in einem Behälter vorgelegt und das Maltodextrin und das Gummi Arabicum darin gelöst. Anschließend werden die erfindungsgemäß einzusetzenden Propenylphenylglycoside und sonstige Bestandteile mit einem Mixer (Turrax) in die oben beschriebene Trägerstofflösung emulgiert. Die Temperatur des resultierenden Gemisches sollte 30°C nicht überschreiten. Das Gemisch wird dann sprühgetrocknet (Solltemperatur Eingang: 185 - 195°C, Solltemperatur Ausgang: 70 - 75°C). Die sprühgetrocknete Halbfertigware enthält ca. 18 - 22 % der erfindungsgemäß zu verwendenden Verbindung 1, die Halbfertigwaren B bis G enthalten entsprechende Gesamtmengen an Verbindung 1, Phloretin und Hesperitin.

Analog können auch sprühgetrocknete Zubereitungen mit anderen erfindungsgemäß zu verwendenden Propenylphenylglycosiden hergestellt werden.

### Anwendungsbeispiel 3: Sprühgetrocknete Zubereitung als Halbfertigware zur Aromatisierung von Fertigwaren unter Verwendung weiterer geschmacksmodulierender Stoffe

| | **Zubereitung (Einsatz in Gew.-%)** | | | | | | | |
|---|---|---|---|---|---|---|---|---|
| **Inhaltsstoff** | **A** | **B** | **C** | **D** | **E** | **F** | **G** | **H** |
| Trinkwasser | 60,8 | 60,8 | 60,8 | 60,8 | 60,8 | 60,8 | 60,8 | 60,8 |
| Maltodextrin aus Weizen | 24,3 | 24,3 | 24,3 | 24,3 | 24,3 | 24,3 | 24,3 | 24,3 |
| Gummi Arabicum | 6,1 | 6,1 | 6,1 | 6,1 | 6,1 | 6,1 | 6,1 | 6,1 |
| Verbindung 1 | 4,4 | 2,2 | 4,4 | 6,4 | 3,2 | 4,4 | 4,4 | 4,4 |
| Phloretin | | | 2,0 | | 3,2 | | | |
| Hesperetin | | 2,2 | | | | | | |
| gamma-Aminobuttersäure | 4,4 | 4,4 | 2,4 | | | | | |
| Homoeriodictyol | | | | 2,4 | 2,4 | | | |
| Divanillin | | | | | | 4,4 | | |
| 2,4-Dihydroxybenzoesäure-N-(4-hydroxy-3-methoxybenzyl)amid | | | | | | | 2,2 | |
| 6-(4-Hydroxy-3-methoxyphenyl)-hexan-2,4-dion | | | | | | | 2,2 | |
| Diacetyltrimer der Formel 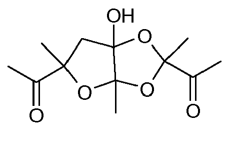 | | | | | | | | 4,4 |

Das Trinkwasser wird in einem Behälter vorgelegt und das Maltodextrin und das Gummi Arabicum darin gelöst. Anschließend werden die Aromastoffe mit einem Mixer (Turrax) in die Trägerstofflösung emulgiert. Die Temperatur des resultierenden Gemisches sollte 30°C nicht überschreiten. Das Gemisch wird dann sprühgetrocknet (Solltemperatur Eingang: 185 - 195°C, Solltemperatur Ausgang: 70 - 75°C). Die sprühgetrocknete Halbfertigware enthält ca. 18 - 22 % Aromastoffe.

### Anwendungsbeispiel 4: Kombinationen mit süß schmeckenden Stoffen als Süßungsmittel

| | **Zubereitung (Einsatz in Gew.-%)** | | | | | | | |
|---|---|---|---|---|---|---|---|---|
| **Inhaltsstoff** | **A** | **B** | **C** | **D** | **E** | **F** | **G** | **H** |
| Sucrose | 89,9 | 89,9 | 89,9 | 89,9 | | | | 50 |
| Fructose | 10 | 10 | 10 | | | | | |
| Tagatose | | | | 10 | | | | |
| High Fructose Corn Sirup | | | | | | 99,9 | | |
| Maltitol | | | | | 79,9 | | 99 | |
| Sorbitol | | | | | 10,0 | | | 49,95 |
| Verbindung 1 | 0,1 | 0,05 | 0,05 | | | 0,05 | | 0,025 |
| Phloretin | | 0,05 | | | | 0,05 | | 0,025 |
| Hesperetin | | | 0,05 | | | | | |
| Verbindung 1 als sprühgetrocknete Zubereitung (Zubereitung A aus Anwendungsbeispiel 2) | | | | 0,5 | 0,5 | | 1 | |

Die Inhaltsstoffe werden in der angegebenen Reihenfolge gemischt. Das resultierende Produkt kann als Süßungsmittel für Nahrungs- oder Genussmittel, z.B. Kaffee oder Tee eingesetzt werden.

Als Beispiel für die Anwendung wird Tee und das Produkt gemischt und in Teebeutel aus Filterpapier abgepackt. Zur Anwendung einen Teebeutel mit 100 - 250 mL kochendem Wasser aufgießen und 2 - 5 min ziehen lassen.

### Anwendungsbeispiel 5: Aromamischungen zur Verstärkung der Süße

| | **Zubereitung (Einsatz in Gew.-%)** | | | | | | | | | |
|---|---|---|---|---|---|---|---|---|---|---|
| **Inhaltsstoff** | **A** | **B** | **C** | **D** | **E** | **F** | **G** | **H** | **I** | **J** |
| Vanillearoma (z.B. erhältlich von Symrise) | 75,00 | | 75,00 | | | | | | | |
| Zuckeraroma Typ Black Treacle | | 2,00 | | | | | | | | |
| Ethyllactat | | | | 1,00 | 0,50 | 0,050 | | 0,50 | 1,00 | 0,05 |
| n-Propyllactat | | | | 0,50 | | | | 0,50 | 0,50 | |
| n-Butyllactat | | | | 0,30 | 0,30 | 0,030 | 1,80 | 0,30 | 0,30 | 0,03 |
| Diethylmalat | | | | 1,00 | | | 1,00 | 0,50 | 1,00 | |
| Diethyltartrat | | | | 0,50 | | | | 0,50 | 0,50 | |
| Diethylsuccinat | | | | 0,50 | | | | | 0,50 | 10,0 |
| Diethylmalonat | | | | 0,50 | | | 2,00 | | 0,50 | |
| Triethylcitrat | | | | 0,50 | | | | 0,50 | 0,50 | |
| Milchsäure | | | | 1,00 | 2,00 | 0,20 | 2,00 | | 2,00 | 0,20 |
| Hesperetin | | | 0,30 | | 1,25 | | 1,25 | | 0,50 | 2,50 |
| Verbindung 1 | 0,625 | 1,00 | 0,325 | 2,50 | 1,25 | 2,50 | 1,25 | 5,00 | 0,30 | 2,50 |
| Phloretin | | 1,45 | | | | | | | 0,30 | |
| Hesperetin | | | | | | | | | 0,40 | |
| 1,2-Propylenglycol | ad 100 | ad 100 | ad 100 | ad 100 | ad 100 | ad 100 | ad 100 | ad 100 | ad 100 | ad 100 |

Die in der Tabelle angegebenen Komponenten werden in der angegebenen Reihenfolge durch Rühren gemischt und ggfs. durch Erwärmung auf 20-50 °C vollständig homogenisiert. Man erhält klare, meist farblose oder gelbliche Lösungen, die als Aroma eingesetzt werden können.

### Anwendungsbeispiel 6: Kaugummis

### Anwendungsbeispiel 6a:

| **Teil** | **Inhaltsstoff** | **Einsatz in Gew.-%** |
|---|---|---|
| A | Kaugummibase, Company "Jagum T" | 30,00 |
| B | Sorbit, pulverisiert | 39,00 |
| | Isomalt^{®} (Palatinit GmbH) | 9,50 |
| | Xylit | 2,00 |
| | Mannit | 3,00 |
| | Aspartam^{®} | 0,10 |
| | Acesulfam^{®} K | 0,10 |
| | Emulgum^{®} (Colloides Naturels, Inc.) | 0,30 |
| C | Sorbitol, 70%ige wässrige Lösung | 14,00 |
| | Glycerin | 1,00 |
| D | Krauseminzaroma, enthaltend 1 Gew.-% Verbindung 1, bezogen auf das Gesamtgewicht des Aromas | 1,00 |

Teile A bis D werden gemischt und intensiv geknetet. Die Rohmasse kann z.B. in Form von dünnen Streifen zu verzehrsfertigen Kaugummis verarbeitet werden.

### Anwendungsbeispiel 6b: Non-stick Kaugummi

Die Kaugummibase K1 bestand aus 2,0% Butyl Rubber (Isobuten-Isopren-Copolymer, MW 400000), 6,0% Polyisobuten (MW = 43800), 43,5% Polyvinylacetat (MW = 12000), 31,5% Polyvinylacetat (MW = 47000), 6,75% Triacetin und 10,25% Calciumcarbonat. Die Herstellung der Kaugummibase K1 und der Kaugummis kann analog zu US 5,601,858 erfolgen.

| | I (Gew.-%) | II (Gew.-%) | III (Gew.-%) |
|---|---|---|---|
| Kaugummibase K1 | 26,00 | 26,00 | 26,00 |
| Triacetin | 0,25 | 0,25 | 0,25 |
| Lecithin | 0,50 | 0,50 | 0,50 |
| Sorbitol, kristallin | 40,90 | 40,60 | 40,50 |
| Mannitol | 15,30 | 15,20 | 15,10 |
| Glycerin | 12,10 | 12,00 | 11,80 |
| Aspartam | 0,17 | 0,17 | 0,17 |
| Verkapseltes Aspartam | 1,08 | 1,08 | 1,08 |
| Amorphes Silica | 1,00 | 1,00 | 1,00 |
| Baumwollsamenöl | 0,50 | 0,50 | 0,50 |
| Polyoxyethylen-sorbitanmonolaurat (E-432) | 1,00 | 1,00 | 1,00 |
| Verkapseltes Spearmint-Aroma (enthält L-Carvon) | 0,20 | 0,10 | 0,30 |
| Verkapseltes Wintergrün-Aroma (enthält Methylsalicylat) | - | 0,40 | - |
| Pfefferminzöl, enthaltend 1 Gew.-% Verbindung 1, bezogen auf das Gesamtgewicht des Aromas | 1,00 | 1,20 | 1,50 |
| L-Menthyl-L-lactat | 0,10 | - | 0,30 |

### Anwendungsbeispiel 6c: Bubble gum

Die Herstellung der Bubble Gums kann analog zu US 5,093,136 erfolgen.

| | I(Gew.-%) | II(Gew.-%) |
|---|---|---|
| Styrol-Butadien-Copolymer (SBR) | 19,50 | 17,50 |
| Polyisobuten | 8,00 | 8,00 |
| Sorbitol Pulver | 49,19 | 47,19 |
| Sorbitol, 70 %, in Wasser | 9,20 | 22,20 |
| Hydrierte Stärkehydrolysate (HSH) | 9,00 | - |
| Glycerin | 3,00 | 2,00 |
| Aspartam | 0,10 | 0,10 |
| Verkapseltes Aspartam | 0,50 | 0,50 |
| Roter und blauer Farbstoff | 0,01 | 0,01 |
| Erbeer-Himbeer-Aroma, enthaltend 1 Gew.-%Verbindung 1, bezogen auf das Gesamtgewicht des Aromas | 1,50 | 2,50 |

Die Kaugummis der Rezeptur (I) wurden als kompakte Kugeln, die der Rezeptur (II) als Hohlkugeln ausgeformt.

### Anwendungsbeispiel 6d: Kaugummi

Die Kaugummibase K2 bestand aus 28,5% Terpenharz, 33,9% Polyvinylacetat (MW = 14000), 16,25% hydriertes Pflanzenöl, 5,5% Mono- und Diglyceride, 0,5% Polyisobuten (MW 75000), 2,0% Butyl Rubber (Isobuten-Isopren-Copolymer), 4,6% amorphes Siliciumdioxid (Wassergehalt ca. 2,5%), 0,05% Antioxidans tert.-Butylhydroxytoluol (BHT), 0,2% Lecitihin, und 8,5% Calciumcarbonat. Die Herstellung der Kaugummibase K2 und der Kaugummis kann analog zu US 6,986,907 erfolgen.

| | I (Gew.-%) | II (Gew.-%) | III (Gew.-%) |
|---|---|---|---|
| Kaugummibase K2 | 25,30 | 27,30 | 26,30 |
| Sorbitol | 61,48 | 59,48 | 61,60 |
| Glycerin | 2,40 | 2,40 | 2,40 |
| Lecithin | 7,00 | 7,00 | 7,00 |
| Aspartam | 0,14 | 0,14 | 0,14 |
| Verkapseltes Aspartam | 0,68 | 0,68 | 0,48 |
| Menthol, sprühgetrocknet | 1,00 | 0,50 | 0,40 |
| Kirscharoma, sprühgetrocknet | - | 1,20 | - |
| Citronen-Aroma, enthaltend 1 Gew.-% Verbindung 1, bezogen auf das Gesamtgewicht des Aromas | 1,20 | 1,30 | 1,68 |
| Orangenöl, natürlich | 0,80 | - | - |

Die Kaugummis der Rezeptur (I) und (II) wurden als Streifen, die der Rezeptur (III) als Pellets ausgeformt.

### Anwendungsbeispiel 7: Zahnpasta

| **Teil** | **Inhaltsstoff** | **Einsatz in Gew.-%** |
|---|---|---|
| A | demineralisiertes Wasser | 22,00 |
| | Sorbitol, 70%ige wässrige Lösung | 45,00 |
| | Solbrol^{®} M, Natriumsalz (Bayer AG, p-Hydroxybenzoesäurealkylester) | 0,15 |
| | Trinatriumphosphat | 0,10 |
| | Saccharin, 450 fach | 0,20 |
| | Natriummonofluorphosphat | 1,12 |
| | Polyethylenglycol 1500 | 5,00 |
| B | Sident 9 (abrasives Siliciumdioxid) | 10,00 |
| | Sident 22 S (verdickendes Siliciumdioxid) | 8,00 |
| | Natriumcarboxymethylcellulose | 0,90 |
| | Titandioxid | 0,50 |
| C | demineralisertes Wasser | 4,53 |
| | Natriumlaurylsulfat | 1,50 |
| D | Pfefferminzaroma, enthaltend 1 Gew.-% Verbindung 1, bezogen auf das Gesamtgewicht des Aromas | 1,00 |

Die Inhaltsstoffe der Teile A und B werden jeweils für sich vorgemischt und zusammen unter Vakuum bei 25 - 30°C 30 min gut verrührt. Teil C wird vorgemischt und zu A und B gegeben; D wird hinzugefügt und die Mischung unter Vakuum bei 25 - 30°C 30 min gut verrührt. Nach Entspannung ist die Zahnpasta fertig und kann abgefüllt werden.

### Anwendungsbeispiel 8: Zuckerreduzierte Erfrischungsgetränke

### Vergleichszubereitung mit normalem Sucrosegehalt (A)

### Vergleichszubereitung mit reduziertem Sucrosegehalt (B)

| Erfindungsgemäße Zubereitungen (C - H) | **Zubereitung (Einsatz in Gew.-%)** | | | | | | | |
|---|---|---|---|---|---|---|---|---|
| **Inhaltsstoff** | A | B | C | D | E | F | G | H |
| Wasser | 89,85 | 91,85 | 91,78 | 91,787 | 91,289 | 91,594 | 91,490 | 91,289 |
| Sucrose | 10,0 | 8,0 | 8,0 | 8,0 | 8,0 | 8,0 | 8,0 | 8,0 |
| Citronensäure | 0,15 | 0,2 | 0,2 | 0,2 | 0,2 | 0,2 | 0,2 | 0,2 |
| Fructose | | | | | | 0,2 | | |
| Tagatose | | | | | | | 0,3 | |
| Maltitol-Sirup | | | | | 0,5 | | | |
| Erythrit | | | | | | | | 0,5 |
| Verbindung 1 | - | - | 0,020 | 0,0100 | 0,0100 | 0,0050 | 0,0100 | 0,0100 |
| Phloretin | - | - | - | 0,0030 | 0,0005 | 0,0005 | | 0,0005 |
| Hesperetin | - | - | - | - | 0,0005 | 0,0005 | | 0,0005 |

Die Stoffe wurden vorgelegt und mit Wasser aufgefüllt und gelöst.

### Anwendungsbeispiel 9: Verwendung in einem zuckerreduzierten Erfrischungsgetränk zusammen mit anderen Aroma- und Geschmackstoffen

| | | **Zubereitung** | | | | | | | |
|---|---|---|---|---|---|---|---|---|---|
| **Inhaltsstoff** | **Gehalt** | **A** | **B** | **CA** | **D** | **E** | **F** | **G** | **H** |
| Saccharose | % | 8 | 8 | 8 | 8 | 8 | 8 | 8 | 8 |
| Citronensäure | % | 0,2 | 0,2 | 0,2 | 0,2 | 0,2 | 0,2 | 0,2 | 0,2 |
| Verbindung 1 1 % in 1,2-Propylenglycol | % | 0,05 | 0,05 | 0,05 | 0,05 | 0,1 | 0,1 | 0,1 | 0,1 |
| Hesperetin 1 % in 1,2-Propylenglycol | % | - | 0,025 | 0,05 | 0,025 | - | 0,05 | 0,05 | 0,05 |
| Phloretin 1 % in 1,2-Propylenglycol | % | 0,05 | 0,025 | - | 0,025 | 0,1 | - | 0,1 | 0,15 |
| Ethylhydroxymethylfuranon | ppb | 0,01 | | | | | | | |
| Vanillin | ppb | 15 | | | | | | | |
| Diethylmalonat | ppb | | 70 | | | | | | |
| Phenylethylacetat | ppb | | 1 | | | | | | |
| 2-Methylbutanal | ppb | | | 0,3 | | 0,3 | | | |
| Isovaleraldehyd | ppb | | | 0,2 | | 0,2 | | | |
| Furfurylacetat | ppb | | | 0,3 | | | | | |
| Massoilacton | ppb | | | | 5 | 5 | | 5 | 5 |
| γ-Octalacton | ppb | | | | 5 | 5 | | 5 | 5 |
| Ethylbutyrat | ppb | | | 0,5 | | 0,5 | | 0,5 | |
| Maltol | ppb | 350 | | | | 350 | | 350 | |
| 2,5-Dimethyl-4-hydroxy-2H-furan-3-on | ppb | 3 | | | | 3 | | 3 | |
| Ethylisobutyrat | ppb | | 0,1 | | | 0,1 | | 0,1 | |
| Ethyl-2-methylbutyrat | ppb | | 0,1 | | | 0,1 | | 0,1 | |
| 1,2-Propylenglycol | % | 0,1 | 0,1 | 0,1 | 0,1 | 0,1 | 0,1 | 0,1 | 0,1 |
| Butylphenyacetat | ppb | | | | | 10 | | | |
| Acetanisol | ppb | | | | | 20 | | | |
| Methylsorbat | ppb | | | | | 100 | | | |
| L-Lysin | ppm | | | | | | 100 | 30 | |
| Äpfelsäure | ppm | | | | | | 80 | | |
| L-Arginin | ppm | | | | | | 5 | 20 | |
| L-Asparaginsäure | ppm | | | | | | 0,5 | | |
| Calciumchlorid | ppm | | | | | | 20 | | |
| Glutamin | ppm | | | | | | 2 | | |
| Kaliumhydrogenphosphat | ppm | | | | | | 6 | | |
| Magnesiumchlorid | ppm | | | | | | 20 | | |
| L-Valin | ppm | | | | | | 0,5 | | |
| Glycin | ppm | | | | | | | 40 | |
| L-Alanin | ppm | | | | | | | 20 | |
| L-Serin | ppm | | | | | | | 50 | |
| Wasser | zu 100 % auffüllen | | | | | | | | |

Die Stoffe wurden vorgelegt und mit Wasser auf 100 % aufgefüllt und gelöst. Das Produkt wurde im Bedarfsfall in Flaschen abgefüllt und carbonisiert.

### Anwendungsbeispiel 10: Zuckerfreie Hartkaramelle

| Inhaltsstoff | Gehalt (%) |
|---|---|
| Palatinit, Typ M | 75,10 % |
| Wasser | 24,82 % |
| Pfefferminzaroma | 0,1 % |
| Verbindung 1 | 0,025 % |

Palatinit wurde mit Wasser gemischt und die Mischung bei 165 °C aufgeschmolzen und anschließend auf 115°C abgekühlt. Das Pfefferminzaroma und Verbindung 1 wurden zugegeben und nach dem Durchmischen in Formen gegossen, nach dem Erstarren aus den Formen entfernt und anschließend einzeln verpackt.

### Anwendungsbeispiel 11: Fettarme Joghurts

### Vergleichszubereitung mit Zucker (A)

### Vergleichszubereitung mit reduziertem Zuckeranteil (A)

### Erfindungsgemäße Zubereitungen mit reduziertem Zuckeranteil und Verbindung 1 (C)

### Vergleichszubereitung mit reduziertem Zuckeranteil und Hesperetin (D)

| | **Zubereitung (Angaben als Gew.-%)** | | | |
|---|---|---|---|---|
| Inhaltsstoff | A | B | C | D |
| Sucrose | 10 % | 8 % | 8 % | 8% |
| Tagatose | - | - | - | - |
| Fructose | - | - | - | - |
| Verbindung 1 | - | - | 0,015 % | - |
| Hesperetin | - | - | - | 0,01 % |
| Joghurt, 0,1 % Fett | zu 100 % auffüllen | zu 100 % auffüllen | zu 100 % auffüllen | zu 100 % auffüllen |
| Süßreduktion im Vergleich zu A (16 Panelisten, Duotest) | - | -42 % | -23 % | -29 % |

Die Inhaltsstoffe wurden gemischt und bei 5°C gekühlt.

Die sensorische Prüfung ergab, dass alleine mit der Verbindung 1 der Süßkraftverlust durch Zuckerreduktion (Vergleich A zu B) schon großenteils ausgeglichen werden kann (Vergleich A zu C), Hesperetin alleine weniger gut abschneidet.

### Anwendungsbeispiel 12: Verwendung zusammen mit Süßstoffen in fettarmen Joghurts

### Vergleichszubereitung mit Süßstoffmischung (A)

### Erfindungsgemäße Zubereitungen mit Süßstoffmischung und Propenylphenylglycosiden (B-D)

| | **Zubereitung (Angaben als Gew.-%)** | | | |
|---|---|---|---|---|
| **Inhaltsstoff** | A | B | C | D |
| D-Tagatose | 0,482 % | 0,482 % | 0,482 % | 0,482 % |
| Sucralose | 0,003 % | 0,003 % | 0,003% | 0,003% |
| Aspartam | 0,005% | 0,005% | 0,005% | 0,005 % |
| Acesulfam K | 0,01 % | 0,01 % | 0,01 % | 0,01 % |
| Verbindung 1 | - | 0,01 % | 0,005 % | 0,005 % |
| Phloretin | - | - | 0,005 % | - |
| Hesperetin | - | - | - | 0,005 % |
| Joghurt, 0,1 % Fett | zu 100 % auffüllen | zu 100 % auffüllen | zu 100 % auffüllen | zu 100 % auffüllen |

Die Inhaltsstoffe wurden gemischt und bei 5°C gekühlt.

### Anwendungsbeispiel 13: Milchmischgetränke

### Vergleichszubereitungen mit Zucker (A-B)

### Erfindungsgemäße Zubereitungen mit Zucker und Propenylphenylglycosiden (C-E)

| | **Zubereitung (Angaben als Gew.-%)** | | | | |
|---|---|---|---|---|---|
| **Inhaltsstoff** | **A** | **B** | **C** | **D** | **E** |
| Sucrose | 10,0 | 8,0 | 8,0 | 8,0 | 7,0 |
| Fructose | - | - | - | - | 0,5 |
| Tagatose | - | - | - | - | 0,5 |
| Verbindung 1 | - | - | 0,02 % | 0,015 % | 0,015 % |
| Phloretin | - | - | - | 0,005% | - |
| Hesperetin | - | - | - | - | 0,005% |
| H-Milch, 1,5% Fett | zu 100% auffüllen | | | | |

Die Inhaltsstoffe wurden gemischt, mit Milch aufgefüllt, gut gerührt, in Flaschen abgefüllt und bei 5°C gekühlt gelagert.

### Anwendungsbeispiel 14: Zuckerreduziertes Tomatenketchup

### Vergleichszubereitung mit Zucker (A)

### Vergleichszubereitung mit reduziertem Zuckeranteil (B)

### Erfindungsgemäße Zubereitungen mit Zucker und Propenylphenylglycoside (C-I)

| | **Zubereitung (Angaben als Gew.-%)** | | | | | | | |
|---|---|---|---|---|---|---|---|---|
| **Inhaltsstoff** | **A** | **B** | **C** | **E** | **F** | **G** | **H** | **I** |
| Kochsalz | 2 | 2 | 2 | 2 | 2 | 2 | 2 | 2 |
| Stärke, Farinex WM55 | 1 | 1 | 1 | 1 | 1 | 1 | 1 | 1 |
| Sucrose | 12 | 9,6 | 9,2 | 8,4 | 9,6 | 9,6 | 8,4 | 8,4 |
| Tomaten-Konzentrat 2-fach | 40 | 40 | 40 | 40 | 30 | 30 | 30 | 30 |
| Glucosesirup 80 Brix | 18 | 18 | 18 | 18 | 18 | 18 | 18 | 18 |
| Branntweinessig 10% | 7 | 7 | 7 | 7 | 3 | 3 | 3 | 3 |
| Wasser | 20 | 22,4 | 22,4 | 23,2 | 36,0 | 36,0 | 37,2 | 37,2 |
| Verbindung 1 2,5% in 1,2-Propylenglycol | | | 0,4 | 0,2 | 0,2 | 0,4 | 0,2 | 0,2 |
| Phloretin 2,5% in 1,2-Propylenglycol | | | | | | | 0,2 | |
| Hesperetin 2,5%ig in 1,2-Propylenglycol | | | | 0,2 | 0,2 | | | 0,2 |

Die Inhaltsstoffe werden in der angegebenen Reihenfolge gemischt und das fertige Ketchup mit Hilfe eines Rührwerkes homogenisiert, in Flaschen abgefüllt und sterilisiert.

### Anwendungsbeispiel 15: Zuckerreduzierte Eiscremes

### Vergleichszubereitung mit Zucker (A)

### Vergleichszubereitung mit reduziertem Zuckeranteil (B)

### Erfindungsgemäße Zubereitungen mit Zucker und Propenylphenylglycosiden (C-F)

| | **Zubereitung (Gehalt in Gew.-%)** | | | | | |
|---|---|---|---|---|---|---|
| **Inhaltsstoff** | **A** | **B** | **C** | **D** | **E** | **F** |
| Magermilch | 57,15 | 61,15 | 60,95 | 61,05 | 60,95 | 61,05 |
| Pflanzenfett, Schmelzbereich 35 - 40 °C | 20,00 | 20,00 | 20,00 | 20,00 | 20,00 | 20,00 |
| Zucker (Saccharose) | 12,00 | 8,00 | 8,00 | 8,00 | 8,00 | 8,00 |
| Magermilchpulver | 5,00 | 5,00 | 5,00 | 5,00 | 5,00 | 5,00 |
| Glucosesirup 72 % Trockensubstanz | 5,00 | 5,00 | 5,00 | 5,00 | 5,00 | 5,00 |
| Emulgator SE 30 (Grindstedt Products, Dänemark) | 0,65 | 0,65 | 0,65 | 0,65 | 0,65 | 0,65 |
| Aroma, enthaltend 0,1 % Diacetyl und 1 % Vanillin | 0,20 | 0,20 | 0,20 | 0,20 | | |
| Aroma, enthaltend 0,1 % Diacetyltrimer (Formel siehe Anwendungsbeispiel 3), 0,1 % Diacetyl und 1 % Vanillin | | | | | 0,20 | 0,20 |
| Aroma nach Anwendungsbeispiel 5, Zubereitung E | | | 0,20 | | 0,20 | |
| Aroma nach Anwendungsbeispiel 5, Zubereitung H | | | | 0,10 | | 0,10 |

Magermilch und Glucosesirup wurden auf 55° erhitzt und Zucker, Magermilchpulver sowie Emulgator hinzugefügt. Das Pflanzenfett wurde vorerhitzt und die gesamte Masse auf 58°C erwärmt. Nach Zugabe des Aromas wurde mit Hilfe eines Durchflusshochdruckhomogenisators homogenisiert (180 / 50 bar). Die erhaltene Masse wurde 1 min lang bei 78°C temperiert, anschließend auf 2 - 4 °C abgekühlt und 10 h zur Reifung bei dieser Temperatur inkubiert. Danach wurde die gereifte Masse abgefüllt und bei -18°C eingefroren gelagert.

### Anwendungsbeispiel 16: Für Diabetiker geeignetes Eis

Es wurde ein für Diabetiker geeignetes Eis aus folgenden Zutaten hergestellt und in Portionen zu je 95 mL in Becher abgefüllt:
Eingedickte entrahmte Milch, Fructosesirup, Erdbeerstücke und Erbeerpüree (15%), Pflanzenfett, Diätschokoladensplitter (3,5%, mit Emulgator Sojalecithin), Molkenerzeugnis, Rote Bete Saft, Johannisbrotkernmehl, Guarkernmehl, Carrageen, Emulgator (E 471), Gelatine, Säuerungsmittel Citronensäure, Erdbeer-Aroma (enthaltend 2,5 Gew.-% Verbindung 1, bezogen auf das Gesamtgewicht des Erdbeer-Aromas), Farbstoff Carotin.
Nährwert (pro 95 mL):
   Eiweiss 1,8 g, Kohlenhydrate 13,3 g (davon Fructose 9,5 g), Fett 4,2 g.

### Anwendungsbeispiel 17: Diätschokolade auf Basis von Maltit

Es wurde eine für Diabetiker geeignete Schokolade aus folgenden Zutaten hergestellt und in rechteckige Tafeln gegossen:
Maltit, Haselnussmasse, Kakaobutter, Magermilchpulver, Kakaomasse, Inulin, Butterreinfett, Emulgator Sojalecithine, Vanille-Aroma (enthaltend Vanilleschoten-Extrakt, Vanillin, 2 Gew.-% Verbindung 1 und 1 Gew.-% Phloretin, bezogen auf das Gesamtgewicht des Vanille-Aromas).
Nährwert (pro 100 g):
   Eiweiss 8 g, Kohlenhydrate 43 g (davon Maltit 34 g), Fett 34 g.

### Anwendungsbeispiel 18: Diätschokolade auf Basis von Fructose

Es wurde eine für Diabetiker geeignete Schokolade aus folgenden Zutaten hergestellt und in rechteckige Tafeln gegossen:
Kakaomasse, Fructose, Magermilchpulver, Kakaobutter, Inulin, Butterreinfett, Emulgator Sojalecithin, Walnüsse, Speisesalz, Vanille-Aroma (enthaltend Vanillin und 2 Gew.-% Verbindung 1, bezogen auf das Gesamtgewicht des Vanille-Aromas).
Nährwert (pro 100 g):
   Eiweiss 8,8 g, Kohlenhydrate 34 g (davon Fructose 23 g, Lactose 7,5 g, Saccharose 1,4 g), Fett 36 g; Ballaststoffe 18,5 (davon 12,2 g Inulin); Natrium: 0,10 g. Kakao-Anteil mindestens 50 Gew.-%.

### Anwendungsbeispiel 19: Zuckerreduzierte Müslimischung

| Nr. | | A (Gew.-%) | B (Gew.-%) |
|---|---|---|---|
| 1 | Haferflocken | 17,00 | 18,60 |
| 2 | Knusprige Haferflocken Cluster | 10,00 | 12,00 |
| 3 | Reis Crispies | 16,90 | 17,70 |
| 4 | Cornflakes | 16,50 | 17,40 |
| 5 | Korinthen | 3,50 | 3,50 |
| 6 | Haselnüsse, zerhackt | 2,50 | 2,50 |
| 7 | Glucose Sirup aus Weizen, DE 30 | 9,50 | 9,50 |
| 8 | Saccharose | 20,00 | 14,00 |
| 9 | Wasser | 4,00 | 4,00 |
| 10 | Citronensäurepulver, wasserfrei | 0,10 | 0,10 |
| 11 | Verbindung 1 2,5%ig in 1,2-Propylenglycol | - | 0,40 |

Jeweils Bestandteile Nr. 1 bis 6 in einer Drehtrommel mischen (Mix 1). Jeweils Bestandteile Nr. 7 bis 9 erwärmen und Bestandteil Nr. 10 zugeben (sowie in Rezeptur B zusätzlich den Bestandteil Nr. 11 zugeben) (Mix 2). Jeweils Mix 2 zu Mix 1 geben und gut mischen. Zuletzt die resultierende Müslimischung auf ein Backblech geben und in einem Ofen bei 130°C für 8 Minuten trocknen.

### Anwendungsbeispiel 20: Zuckerreduzierte Fruchtgummis

Von einer Expertengruppe wurde die Süßewahrnehmung zwischen den Vollzucker-Fruchtgummis der nachfolgend angegebenen Rezeptur A und den zuckerreduzierten Fruchtgummis der Rezeptur B (der Anteil an Saccharose war um 76% reduziert worden) in beiden Fällen als gleich stark eingestuft. In einem zusätzlich durchgeführten Dreieckstest wurde kein Unterschied hinsichtlich des Süßeindrucks festgestellt.

| | A (Gew.-%) | B (Gew.-%) |
|---|---|---|
| Wasser | 23,70 | 25,60 |
| Saccharose | 34,50 | 8,20 |
| Glucosesirup, DE 40 | 31,89 | 30,09 |
| Iso Syrup C* Tru Sweet 01750 (Cerestar GmbH) | 1,50 | 2,10 |
| Gelatine 240 Bloom | 8,20 | 9,40 |
| Polydextrose (Litesse^{®} Ultra, Danisco Cultor GmbH) | - | 24,40 |
| Gelber und roter Farbstoff | 0,01 | 0,01 |
| Citronensäure | 0,20 | |
| Aroma nach Anwendungsbeispiel 5, Zubereitung F | - | 0,20 |

Polydextrose ist ein selbst nicht süß schmeckendes Polysaccharid mit niedrigem Brennwert.

### Anwendungsbeispiel 21: Schoko-Cappuccino-Eiscreme

Von einer Expertengruppe wurde die Süßewahrnehmung zwischen der Vollzucker-Eiscreme der nachfolgend angegebenen Rezeptur A und der zuckerreduzierten Eiscreme der Rezeptur B (der Anteil an Saccharose war um 25% reduziert worden) in beiden Fällen als gleich stark eingestuft. In einem zusätzlich durchgeführten Dreieckstest wurde kein Unterschied hinsichtlich des Süßeindrucks festgestellt.

| | A (Gew.-%) | B (Gew.-%) |
|---|---|---|
| Glucose-Fructose-Sirup | 14,10 | 14,10 |
| Saccharose | 10,00 | 7,50 |
| Magermilchpulver | 5,00 | 5,00 |
| Sahne (36% Fettanteil) | 24,00 | 24,00 |
| Emulgator und Stabilisator Cremodan^{®} 709VEG (Danisco) | 0,50 | 0,50 |
| Kakaopulver | 5,975 | 5,975 |
| Carrageenan | 0,025 | 0,025 |
| Wasser | 40,20 | 42,30 |
| Cappuccino-Aroma | 0,20 | 0,20 |
| Verbindung 1 2,5%ig in 1,2-Propylenglycol / Ethanol | - | 0,40 |

### Anwendungsbeispiel 23: Gelatinekapseln zum Direktverzehr

| | I (Gew.-%) | II (Gew.-%) | III (Gew.-%) |
|---|---|---|---|
| Gelatinehülle: | | | |
| Glycerin | 2,014 | 2,014 | 2,014 |
| Gelatine 240 Bloom | 7,91 | 7,91 | 7,91 |
| Sucralose | 0,065 | 0,065 | 0,065 |
| Allura Rot | 0,006 | 0,006 | 0,006 |
| Brillantblau | 0,005 | 0,005 | 0,005 |
| | | | |

| Kernzusammensetzung: | | | |
|---|---|---|---|
| Pflanzenöl-Triglycerid (Kokosöl - Fraktion) | 79,49 | 68,55 | 58,55 |
| Orangen-Aroma, enthaltend 2 Gew.-% Verbindung 1, bezogen auf das Gesamtgewicht des Aromas | 10,0 | 20,0 | 28,65 |
| Neotam und Aspartam | 0,01 | 0,05 | - |
| Sucralose | 0,10 | 0,15 | 0,40 |
| 2-Hydroxypropylmenthylcarbonat | 0,33 | 0,20 | - |
| 2-Hydroxyethylmenthylcarbonat | - | 0,20 | 1,00 |
| (1 R,3R,4S) Menthyl-3-carbonsäure-N-ethylamid (WS-3) | - | 0,55 | 0,50 |
| (-)-Menthonglycerinacetal (Frescolat MGA) | - | 0,30 | 0,80 |
| Vanillin | 0,07 | - | 0,10 |

Die zum Direktverzehr geeigneten Gelatinekapseln wurden gemäß WO 2004/050069 hergestellt und hatten einen Durchmesser von 5 mm, das Gewichtsverhältnis von Kernmaterial zu Hüllmaterial lag bei 90 : 10. Die Kapseln öffneten sich im Mund innerhalb von weniger als 10 Sekunden und lösten sich vollständig innerhalb von weniger als 50 Sekunden auf.

## Patentansprüche

1. Verwendung
- eines Propenylphenylglycosids der Formel (I) 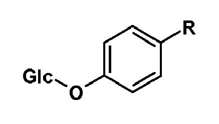
wobei
R (1 *E*)-Prop-1-enyl-, (1 Z)-Prop-1-enyl- oder Prop-2-enyl- ist
und
Glc ein α- oder β-glycosidisch gebundenes Mono- oder Oligosaccharid ist,
oder
- einer Mischung umfassend oder bestehend aus zwei oder mehr unterschiedlichen Propenylphenylglycosiden der Formel (I) wobei R und Glc jeweils eine der oben angegebenen Bedeutungen haben,
zur Verstärkung des süßen Geschmacks eines süß schmeckenden Stoffes oder des süßen Geruchseindrucks eines Aromastoffes, der einen süßen Geruchseindruck verursacht.

2. Verwendung gemäß Anspruch 1, wobei in Formel (I)
Glc ein α- oder β-glycosidisch gebundendes Mono- oder Oligosaccharid ist, ausgewählt aus der Gruppe bestehend aus D-Glucopyranose, D-Galactopyranose, D-Mannopyranose, Maltobiose, Cellobiose, Lactose, Primeverose, Neohesperidose und Rutinose.

3. Verwendung gemäß Anspruch 1 oder 2, wobei das bzw. jedes Propenylphenylglycosid ausgewählt ist aus der Gruppe bestehend aus α- und β-Anomeren
- des 1-*O*-[4-(Propen-2-enyl)phenyl]-D-glucopyranosides (Chavicolglucosid, Verbindung 1),
- des 1-*O*-[4-(Propen-2-enyl)phenyl]-6-O-β-D-apiofuranosyl-D-glucopyranosids (Furcatin, Verbindung 2),
- des 1-*O*-[4-(Propen-2-enyl)phenyl]-6-O-β-D-rutinosids (Verbindung 3) und
- des 1-*O*-[4-(Propen-2-enyl)phenyl]-O-β-D-xylopyranosyl-(1-6)-β-D-glucopyranosids (p-Allylphenylprimeverosid, Miyaginin, Verbindung 4)

4. Verwendung nach einem der vorangehenden Ansprüche, zur Verstärkung des süßen Geschmacks eines süß schmeckenden Stoffes oder des süßen Geruchseindrucks eines Aromastoffes, der einen süßen Geruchseindruck verursacht, in einer der Ernährung, der Mundpflege oder dem Genuss dienenden Zubereitung.

5. Zubereitung aus der Gruppe bestehend aus der Ernährung, der Mundpflege oder dem Genuss dienende Zubereitungen, Halbfertigwaren, Riech-, Aroma- oder Geschmacksstoffkompositionen oder Würzmischungen, umfassend die folgenden Komponenten:
(a) ein oder mehrere Propenylphenylglycoside der Formel (I) 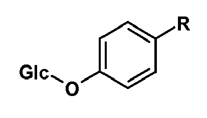 wobei jeweils
R (1 *E*)-Prop-1-enyl-, (1 Z)-Prop-1-enyl- oder Prop-2-enyl- ist
und
Glc ein α- oder β-glycosidisch gebundenes Mono- oder Oligosaccharid ist
sowie
(b) einen oder mehrere weitere süß schmeckende Stoffe
und/oder
(c) einen oder mehrere Aromastoffe, die einen süßen Geruchseindruck verursachen,
wobei die Gesamtmenge an Komponente (a) in der Zubereitung ausreicht, den süßen Geschmackseindruck des bzw. der süß schmeckenden Stoffe (b) bzw. den süßen Geruchseindruck des bzw. der Aromastoffe (c), die einen süßen Geruchseindruck verursachen, sensorisch überproportional zu verstärken.

6. Zubereitung nach Anspruch 5, wobei in Formel (I)
Glc ein α- oder β-glycosidisch gebundendes Mono- oder Oligosaccharid ist, ausgewählt aus der Gruppe bestehend aus D-Glucopyranose, D-Galactopyranose, D-Mannopyranose, Maltobiose, Cellobiose, Lactose, Primeverose, Neohesperidose und Rutinose ist.

7. Zubereitung nach Anspruch 5 oder 6, umfassend als oder in Komponente (a):
ein Propenylphenylglycosid ausgewählt aus der Gruppe bestehend aus α- und β-Anomeren des
- 1-*O*-[4-(Propen-2-enyl)phenyl]-D-glucopyranosides (Chavicolglucosid, Verbindung 1),
- des 1-*O*-[4-(Propen-2-enyl)phenyl]-6-O-β-D-apiofuranosyl-D-glucopyranosids (Furcatin, Verbindung 2),
- des 1-*O*-[4-(Propen-2-enyl)phenyl]-6-O-β-D-rutinosids (Verbindung 3) oder
- des 1-*O*-[4-(Propen-2-enyl)phenyl]-O-β-D-xylopyranosyl-(1-6)-β-D-glucopyranosids (p-Allylphenylprimeverosid, Miyaginin, Verbindung 4)
oder eine Mischung von zwei oder mehr Propenylphenylglycosiden der besagten Gruppe.

8. Zubereitung nach einem der Ansprüche 5 bis 7, umfassend als oder in Komponente (b) einen oder mehrere Zucker, wobei die Gesamtmenge an Propenylphenylglycosiden der Formel (I) (Komponente (a)) in der Zubereitung ausreicht, um im Vergleich mit einer Zubereitung, die bei ansonsten identischer Zusammensetzung keine (i) Propenylphenylglycoside der Formel (I) aber zumindest die 1,05-fache Menge an Zucker umfasst, den gleichen oder einen verstärkten Süßeeindruck zu vermitteln.

9. Zubereitung nach einem der Ansprüche 5 bis 8, umfassend
als oder in Komponente (b) einen oder mehrere weitere süß schmeckende Stoffe, wobei der oder die weiteren süß schmeckenden Stoffe ausgewählt sind aus der Gruppe bestehend aus:
(i) ein oder mehrere Kohlenhydrate ausgewählt aus der Gruppe bestehend aus Sucrose, Trehalose, Lactose, Maltose, Melizitose, Melibiose, Raffinose, Palatinose, Lactulose, D-Fructose, D-Glucose, D-Galactose, L-Rhamnose, D-Sorbose, D-Mannose, D-Tagatose, D-Arabinose, L-Arabinose, D-Ribose, D-Glyceraldehyd, Maltodextrin und pflanzliche Zubereitungen enthaltend einen oder mehrere der genannten Kohlenhydrate,
(ii) ein oder mehrere Zuckeralkohole ausgewählt aus der Gruppe bestehend aus Glycerin, Erythritol, Threitol, Arabitol, Ribitol, Xylitol, Sorbitol, Mannitol, Maltitol, Isomaltit, Dulcitol und Lactitol,
(iii) ein oder mehrere Proteine und/oder Aminosäuren aus der Gruppe bestehend aus Miraculin, Monellin, Thaumatin, Curculin, Brazzein, Glycin, D-Leucin, D-Threonin, D-Asparagin, D-Phenylalanin, D-Tryptophan, L-Prolin,
(iv) ein oder mehrere Süßstoffe aus der Gruppe bestehend aus Magap, Natriumcyclamat, Acesulfam K, Neohesperidindihydrochalkon, Saccharin-Natriumsalz, Aspartam, Superaspartam, Neotam, Alitam, Sucralose, Stevioside, Rebaudioside, Lugduname, Carrelame, Sucrononate, Sucrooctate, Monatin, Mogroside und Phyllodulcin,
und deren Mischungen
und/oder
(c) einen oder mehrere Aromastoffe, die einen süßen Geruchseindruck verursachen, wobei der oder die weiteren Aromastoffe, die einen süßen Geruchseindruck verursachen, ausgewählt sind aus der Gruppe bestehend aus:
Vanillin, Ethylvanillin, Ethylvanillinisobutyrat (= 3-Ethoxy-4-isobutyryloxybenz-aldehyd), Furaneol^{®} (2,5-Dimethyl-4-hydroxy-3(2H)-furanon) und Abkömmlinge (z.B. Homofuraneol, 2-Ethyl-4-hydroxy-5-methyl-3(2H)-furanon), Homofuronol (2-Ethyl-5-methyl-4-hydroxy-3(2H)-furanon und 5-Ethyl-2-methyl-4-hydroxy-3(2H)-furanon), Maltol und Abkömmlinge (z.B. Ethylmaltol), Cumarin und Abkömmlinge, gamma-Lactone (z.B. gamma-Undecalacton, gamma-Nonalacton), delta-Lactone (z.B. 4-Methyldeltalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenone, 3-Hydroxy-4,5-dimethyl-2(5H)-furanon, Fruchtester und Fruchtlactone (z.B. Essigsäure-n-butylester, Essigsäureisoamylester, Propionsäureethylester, Buttersäureethylester, Buttersäure-n-butylester, Buttersäureisoamylester, 3-Methyl-buttersäureethylester, n-Hexansäureethylester, n-Hexansäureallylester, n-Hexansäure-n-butylester,
n-Octansäureethylester, Ethyl-3-methyl-3-phenylglycidat, Ethyl-2-trans-4-cis-decadienoat), 4-(p-Hydroxyphenyl)-2-butanon, 1,1-Dimethoxy-2,2,5-trimethyl-4-hexan, 2,6-Dimethyl-5-hepten-1-al und Phenylacetaldehyd.

10. Der Ernährung, der Mundpflege oder dem Genuss dienende Zubereitung nach einem der Ansprüche 5 bis 9, umfassend eine Gesamtmenge von weniger als 0,05 Gew.-% (500 ppm), vorzugsweise weniger als 0,025 Gew.-% (250 ppm), an Propenylphenylglycosiden der Formel (l), bezogen auf das Gesamtgewicht der Zubereitung.

11. Der Ernährung, der Mundpflege oder dem Genuss dienende Zubereitung nach einem der Ansprüche 5 bis 10, umfassend eine Gesamtmenge im Bereich von 0,1 bis 500 ppm, bevorzugt im Bereich von 1 bis 250 ppm, besonders bevorzugt im Bereich von 50 bis 200 ppm, an Propenylphenylglycosiden der Formel (I), bezogen auf das Gesamtgewicht der Zubereitung.

12. Der Ernährung, der Mundpflege oder dem Genuss dienende Zubereitung nach einem der Ansprüche 5 bis 11, wobei die Zubereitung ausgewählt ist aus der Gruppe bestehend aus:
(A) Süßwaren,
(B) alkoholische oder nicht-alkoholische Getränke oder Instantgetränke,
(C) Getreideprodukte und/oder Nussprodukte,
(D) Milchprodukte,
(E) Frucht- und/oder Gemüsezubereitungen,
(F) Produkte auf Fett- und Ölbasis oder Emulsionen derselben
(G) Mundpflegeprodukte.

13. Der Ernährung, der Mundpflege oder dem Genuss dienende Zubereitung nach einem der Ansprüche 5 bis 12, umfassend
Komponente (a), umfassend oder bestehend aus Propenylphenylglycosiden,
Komponente (b), umfassend oder bestehend aus einem oder mehreren Zuckern,
sowie gegebenenfalls
Komponente (c),
wobei die Gesamtmenge an Komponente (a) in der Zubereitung
ausreicht, um im Vergleich mit einer Zubereitung, die bei ansonsten identischer Zusammensetzung keine Propenylphenylglycosiden der Formel (I), aber zumindest die 1,05-fache Menge an Zucker umfasst, den gleichen oder einen verstärkten Süßeeindruck zu vermitteln
und/oder
im Bereich von 0,1 bis 500 ppm liegt.

14. Zubereitung nach einem der Ansprüche 5 bis 9, ausgewählt aus der Gruppe bestehend aus Halbfertigwaren, Riech-, Aroma- oder Geschmacksstoffkompositionen oder Würzmischungen, umfassend eine Gesamtmenge im Bereich von 0,0001 Gew.-% bis 95 Gew.-%, bevorzugt 0,001 Gew.-% bis 80 Gew.-%, besonders bevorzugt 0,001 Gew.-% bis 50 Gew.-%, an Propenylphenylglycosiden der Formel (I), bezogen auf das Gesamtgewicht der Zubereitung.

15. Halbfertigware nach einem der Ansprüche 5 bis 9 oder 14, **dadurch gekennzeichnet, dass** sie sprühgetrocknet ist.

16. Zubereitung nach einem der Ansprüche 5 bis 15, umfassend
als zusätzliche Komponente (d)
einen oder mehrere Ester ausgewählt aus der Gruppe bestehend aus Milchsäure-C₁-C₆-Estern, Weinsäure-di-C₁-C₄-Estern, Bersteinsäure-di-C₁-C₄-Estern, Malonsäure-di-C₁-C₄-Estern, Äpfelsäure-di-C₁-C₄-Estern, Citronensäure-di-C₁-C₄-Estern und Citronensäure-tri-C₁-C₄-Estern,
und/oder
ein oder mehrere Lösungsmittel ausgewählt aus der Gruppe bestehend aus 1,2-Propylenglycol, Dimethylsulfoxid, Ethanol, und Ethanol/Wasser-Mischungen.

17. Zubereitung nach einem der Ansprüche 5 bis 16, weiter umfassend zumindest eine weitere Substanz zum Maskieren oder Vermindern eines bitteren, metallischen, kalkigen, sauren oder adstringierenden Geschmackseindrucks oder zum Verstärken eines süßen, salzigen oder Umami-Geschmackseindrucks.

18. Zubereitung nach einem der Ansprüche 5 bis 17, umfassend eine oder mehrere Substanzen aus der Gruppe bestehend aus Hesperetin, Phloretin und deren Salzen.

19. Verfahren zum Verstärken des süßen Geschmacks eines süß schmeckenden Stoffes oder des süßen Geruchseindrucks eines Aromastoffes, der einen süßen Geruchseindruck verursacht, mit folgendem Schritt:
- Mischen eines oder mehrerer süß schmeckender Stoffe (Komponente (b)) oder eines oder mehrerer Aromastoffe, der bzw. die einen süßen Geruchseindruck verursachen (Komponente (c)), mit einer Gesamtmenge einer Komponente (a) wie in einem der Ansprüche 5 bis 7 definiert,
wobei die Gesamtmenge an Komponente (a) in der Zubereitung ausreicht, den süßen Geschmackseindruck des bzw. der süß schmeckenden Stoffe (b) bzw. den süßen Geruchseindruck des bzw. der Aromastoffe (c), die einen süßen Geruchseindruck verursachen, sensorisch zu verstärken.

20. Propenylphenylglycosid der Formel (I) 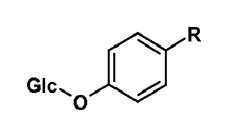 wobei
R (1 *E*)-Prop-1-enyl-, (1 Z)-Prop-1-enyl- oder Prop-2-enyl- ist
und
Glc ein α-glycosidisch gebundenes Mono- oder Oligosaccharid ist,
oder
- einer Mischung umfassend oder bestehend aus zwei oder mehr unterschiedlichen Propenylphenylglycosiden der Formel (I) wobei R und Glc jeweils eine der oben angegebenen Bedeutungen haben.
